# EUROPEAN PATENT APPLICATION

(11) **EP 4 768 162 A1**
(43) Date of publication of application: **01.07.2026**
(21) Application number: 25227860.1
(22) Date of filing: 31.12.2025
(51) Int. Cl.: B23K 9/073, B23K 9/09, B23K 9/095, B23K 9/10, B23K 9/173

(54) **SYSTEMS AND METHODS FOR MODIFYING ONE OR MORE TARGET WELDING PARAMETERS OF A WELDING PARAMETER-CONTROLLED MODE BASED ON ONE OR MORE MEASURED WELDING PARAMETERS**

(30) Priority: 31.12.2024 US 202463740731 P; 29.12.2025 US 202519435004
(71) Applicant: Illinois Tool Works Inc., Glenview IL 60025 (US)
(72) Inventor: UECKER, James Lee, Glenview, 60025 (US); WAGNER, Dustin, Glenview, 60025 (US)
(74) Representative: HGF

(57) **Abstract**

A welding system (100) comprises: power conversion circuitry (110) configured to convert input power to welding power and to output the welding power to a weld circuit; and control circuitry (112) configured to: control the power conversion circuitry (110) to output the welding power according to one or more first pulse cycles at least by outputting the welding power in a voltage-controlled mode according to one or more first target voltages during at least a portion of the one or more first pulse cycles; determine a second target voltage based on one or more measured currents and a current range; and control the power conversion circuitry (110) to output the welding power according to a second pulse cycle at least by outputting the welding power in the voltage-controlled mode according to the second target voltage during at least a portion of the second pulse cycle.

## Description

### RELATED APPLICATIONS

The present application claims the benefit of U.S. Provisional Patent Application Serial No. 63/740,731, filed December 31, 2024, entitled "SYSTEMS AND METHODS FOR MODIFYING ONE OR MORE TARGET WELDING PARAMETERS OF A WELDING PARAMETER-CONTROLLED MODE BASED ON ONE OR MORE MEASURED WELDING PARAMETERS." The entirety of U.S. Provisional Patent Application Serial No. 63/740,731 is expressly incorporated herein by reference.

### FIELD OF THE DISCLOSURE

This disclosure relates generally to welding systems and, more particularly, to systems, methods, and control circuitry for controlling one or more target welding parameters of a welding parameter-controlled mode based on one or more measured welding parameters.

### BACKGROUND

Welding components (e.g., welding torches) are sometimes powered by welding power supplies. Conventional power supplies use a range of electrical components and/or electrical circuitry to produce appropriate welding power for various welding operations and/or welding components.

Power supplies may be used to conduct a welding operation, such as an arc welding operation. For example, gas-metal arc welding ("GMAW") (also referred to as metal inert gas welding ("MIG")) is a welding process in which an electric arc forms between an electrode and pieces of metal that are to be welded. In many systems, the electrode consists of a wire that is advanced through a welding torch. The power source applies electrical current to the electrode so as to pass the electric arc between the electrode and a work piece, thereby heating the electrode and causing the pieces of metal to melt. Upon cooling down of the melted pieces of metal, the pieces of metal join and form a weld. Electrical and/or physical parameters can be adjusted to give the best electric arc possible and improve the overall welding process.

### SUMMARY

Systems, methods, and control circuitry for controlling one or more target welding parameters of a welding parameter-controlled mode based on one or more measured welding parameters are disclosed, substantially as illustrated by and described in connection with at least one of the figures, as set forth more completely in the claims.

### BRIEF DESCRIPTION OF THE DRAWINGS

FIG. 1 illustrates an example welding system, in accordance with aspects of this disclosure;
FIG. 2A illustrates a graph (x-axis: time; y-axis: voltage) of measured voltages of a welding system during a first example pulse cycle having a short circuit duration that is less than a target short circuit duration and a second example pulse cycle that is modified based on the short circuit duration, in accordance with aspects of this disclosure;
FIG. 2B illustrates a graph (x-axis: time; y-axis: voltage) of measured voltages of a welding system during a first example pulse cycle having a short circuit duration that is greater than a target short circuit duration and a second example pulse cycle that is modified based on the short circuit duration, in accordance with aspects of this disclosure;
FIGS. 3A-3D illustrate an example sequence of maintaining an arc length by adjusting one or more welding parameters, in accordance with aspects of this disclosure;
FIG. 4 illustrates a graph (x-axis: time; y-axis: voltage/current) of measured voltages and currents of an example of a welding system undergoing repetitive welding parameter modification during three exemplary pulse cycles, in accordance with aspects of this disclosure;
FIG. 5 illustrates a graph (x-axis: time; y-axis: voltage/current) of measured voltages and currents of an example of a welding system undergoing and resolving repetitive welding parameter modification during four exemplary pulse cycles, in accordance with aspects of this disclosure;
FIG. 6 illustrates a graph (x-axis: time; y-axis: voltage/current) of measured voltages and currents of an example of a welding system undergoing and resolving repetitive welding parameter modification during three exemplary pulse cycles, in accordance with aspects of this disclosure;
FIG. 7A illustrates a flowchart representative of example machine readable instructions which may be executed by the welding system of FIG. 1 to control welding parameters during a welding operation, in accordance with aspects of this disclosure; and
FIG. 7B illustrates a flowchart representative of example machine readable instructions which may be executed by the welding system of FIG. 1 in some examples of the process of FIG. 7A.

The figures are not necessarily to scale. Where appropriate, similar or identical reference numbers are used to refer to similar or identical components.

### DETAILED DESCRIPTION

Inexperienced welders, while welding, often struggle to maintain often-desirable aspects of a weld process, such as a constant arc length, travel speed, weld angle, contact tip to work distance ("CTWD"), etc. Failure to maintain appropriate weld technique may decrease the quality of welds they produce and/or increase the time necessary to conduct a welding operation (e.g., by requiring repetition of a welding process). A welding arc that has an arc length which is too long or too short may increase spatter, reduce weld quality (e.g., by a short welding arc providing too little heat and reducing attachment strength of a weld, a long welding arc providing too much heat and burning a hole through a workpiece, etc.), and/or warp, distort, and/or otherwise damage a workpiece.

Some disclosed example systems, methods, and control circuitry provide improved control and/or maintenance of an arc length of a welding arc by determining one or more welding parameters based on one or more short circuit parameters of one or more short circuit events. Some disclosed examples employ a pulsed welding process (e.g., GMAW) that utilizes "pulses" (e.g., a controlled increase of voltage, current, power, enthalpy, resistance, etc. of weld power for a defined period of time). For example, a pulsed welding process may employ one or more "pulse cycles." A pulse cycle may alternate between one or more higher-voltage "peak" phases (e.g., pulses) and one or more other phases (e.g., a lower-voltage "background" phase). In some examples, the pulsed welding process is configured to cause a short circuit event after each pulse. In other cases, short circuit events may be unintentional or inadvertent.

In an example pulse cycle, a pulse creates a molten ball at a tip of an electrode (e.g., welding wire) of the welding system and deposits the molten ball of material onto a workpiece. For example, a higher voltage of a peak phase of a pulse cycle may melt a greater amount of the electrode than a lower voltage of a background phase of the pulse cycle. The molten ball may be deposited to a weld pool on the workpiece, and the molten ball may briefly join the electrode to the weld pool in a short circuit event that decreases weld voltage (e.g., to a voltage level below a target voltage of a background phase). By measuring one or more parameters of a short circuit event, disclosed examples determine one or more aspects of a welding system and/or a welding operation, such as by determining an arc length of a welding arc based on a measured duration of a short circuit event (a "short circuit duration"). Accordingly, disclosed examples may control one or more aspects of a welding system and/or a welding operation by modifying one or more welding parameters based on one or more measured parameters of one or more short circuit events. In some examples, one or more other welding modes and/or transfer modes may be used.

A short circuit parameter may be used, e.g., to determine one or more parameters of a welding system and/or as a proxy for one or more parameters of a welding system. For example, a short circuit duration may indicate an arc length of a welding arc. A short circuit duration that is shorter than a target short circuit duration may indicate that the tip of the electrode of the welding system is too far from the work piece (e.g., because a molten ball may join an electrode and a weld pool for a shorter period of time when the electrode is further from the weld pool). Conversely, a short circuit duration that is longer than a target short circuit duration may indicate that the tip of the electrode of the welding system is too close to the work piece, e.g., because a molten ball may join an electrode and a weld pool for a longer period of time when the electrode is closer to the weld pool.

Accordingly, some disclosed examples receive a target short circuit parameter (e.g., a single value and/or a range of values) or determine the target short circuit parameter (e.g., based on a target arc length of a welding arc). A short circuit parameter may include a short circuit duration and/or one or more other measurable qualities of one or more short circuit events. Some disclosed examples compare one or more measured short circuit durations to the target short circuit duration to determine whether an arc length of the welding arc is equal to the target arc length value and/or within the target arc length range and, if not, modify one or more welding parameters (e.g., pulse width, pulse frequency, target peak voltage, target peak current, ramping up rate, wire feed speed, etc.) to adjust the arc length of the welding arc based on, e.g., the target arc length and the difference between the measured short circuit duration and the target short circuit duration. For example, modifying one or more welding parameters by, e.g., increasing a wavelength width, increasing a pulse width, increasing a wavelength frequency, increasing a pulse frequency, increasing a target voltage, increasing a target current, increasing a ramping up rate, and/or decreasing a ramping down rate may cause an electrode to melt faster due to increased heat being applied to the electrode. By melting the electrode faster, a distance between a tip of the electrode and a weld pool (e.g., an "arc length) may increase by decreasing a length of an electrode extension of the electrode (e.g., a distance the electrode extends past a contact tip of a welding torch). Conversely, the electrode can be made to melt slower, e.g., by decreasing a wavelength width, decreasing a pulse width, decreasing a wavelength frequency, decreasing a pulse frequency, decreasing a target voltage, decreasing a target current, decreasing a ramping up rate, and/or increasing a ramping down rate. Accordingly, one or more welding parameters may be automatically controlled based on measured short circuit duration to maintain and/or control an arc length of a welding arc.

By controlling and/or maintaining an arc length of a welding arc, disclosed example systems, methods, and control circuitry may lower the difficulty of welding, improve the quality of a weld, and/or reduce the time required for a welding operation by reducing or eliminating instances of undesirable arc lengths during the welding operation and, thereby, problems and disruptions caused by such undesirable arc lengths. A background phase may have a duration of, e.g., greater than or equal to 1 milliseconds and/or less than or equal to 25 milliseconds. A pulse phase may have a duration of, e.g., greater than or equal to 1 millisecond and less than or equal to 3 milliseconds. Accordingly, during some disclosed example pulse welding operations, 300 or more short circuit events may occur per second. Due to such high frequencies of short circuit events, using one or more measured parameters of such short circuit events for controlling one or more welding parameters of a welding system and/or a welding operation may enable very rapid adjustment of such welding parameters. Some disclosed examples may, thereby, automatically, quickly, and/or accurately determine and/or implement modifications to one or more welding parameters by comparing one or more measured short circuit parameters (e.g., a measured short circuit duration) with one or more target short circuit parameters (e.g., a target short circuit duration) to control one or more aspects of a welding system and/or a welding process (e.g., arc length of a welding arc).

As used herein, the term "welding parameter-controlled mode" (as in, e.g., a "voltage-controlled mode," a "current-controlled mode," a "power-controlled mode," a "resistance-controlled mode," an "enthalpy-controlled mode," etc.) refers to an operating mode of one or more components, systems, and/or processes of a welding operation (e.g., of power conversion circuitry, a generator, one or more other sources of welding power, a wire feeder, control circuitry, etc.) wherein one or more welding parameters are controlled and/or otherwise modified based on a difference between one or more measured welding parameters and one or more respective target welding parameters (e.g., one or more target values, one or more target threshold values, one or more target ranges of values, etc.). For example, when controlling power conversion circuitry to output welding power to a weld circuit in a voltage-controlled mode, control circuitry may control the power conversion circuitry to increase or decrease an output current (e.g., a number of amps) of the power conversion circuitry and/or one or more other welding parameters based on a difference between a measured voltage of the weld circuit and a target voltage.

Further, control circuitry may control power conversion circuitry and/or a wire feeder according to an "arc length-controlled mode. As used herein, the term "arc length-controlled mode" refers to an operating mode a "resistance-controlled mode," an "enthalpy-controlled mode," etc.) refers to an operating mode of one or more components, systems, and/or processes of a welding operation (e.g., of power conversion circuitry, a generator, one or more other sources of welding power, a wire feeder, control circuitry, etc.) wherein one or more welding parameters are controlled and/or otherwise modified based on a difference between a target arc length and one or more measured arc lengths. An arc length-controlled mode may determine a measured arc length, determine a target arc length, and/or modify one or more welding parameters based on a proxy for a target arc length and/or a proxy for a measured arc length. For example, and as described above, some disclosed examples operate in an arc length-controlled mode by modifying one or more welding parameters based on a target short circuit parameter (e.g., short circuit duration) and one or more short circuit parameters (e.g., one or more short circuit durations) of one or more short circuit events.

However, in some circumstances, modifications of a welding parameter by a first control loop (e.g., a control loop of a welding parameter-controlled mode) to maintain a target welding parameter, when made in the same weld process as modifications of a welding parameter by a second control loop (e.g., a control loop of an arc length-controlled mode), may cause the two welding parameters to undergo "repetitive" welding parameter modification by repeatedly increasing and/or repeatedly decreasing, e.g., until either or both of the welding parameters reach a non-ideal equilibrium level. For example, repetitive welding parameter modification of output current by a control loop of a voltage-controlled mode and of pulse width of voltage pulses by an arc length-controlled mode may cause pulse width to repetitively increase and output current to repetitively decrease until the pulse width and output current reach respective equilibrium levels that are insufficient for proper transfer of a molten ball at a tip of an electrode to a workpiece. Accordingly, repetitive welding parameter modification may cause one or more welding parameters to reach non-ideal levels, e.g., which are insufficient to create proper weld quality, prevent or inhibit molten ball transfer to a workpiece, and/or otherwise prevent or inhibit one or more processes of a welding operation. Such repetitive welding parameter modification of two or more welding parameters by two or more control loops may, thereby, adversely affect a welding operation or a weld, such as by worsening weld quality of a weld, increasing difficulty of a welding operation, and/or interrupting a welding operation by requiring a user to manually modify one or more welding parameters.

Repetitive welding parameter modification may occur in a welding operation due to a non-ideal initial condition of a weld circuit or the welding operation, such as one or more target welding parameters (e.g., setpoints selected by a user or a predetermined setpoint of the welding operation) being set too high or too low, the weld circuit containing an unknown or unexpectedly large amount of resistance, inductance, and/or impedance (e.g., caused by the workpiece, poor ground connections, too small of weld cables, stainless steel or another high-resistance material being welded upon, a distance between a welding torch and a power source, and/or one or more variable or non-ideal components or aspects of the weld circuit), etc. The non-ideal initial condition may cause a first measured parameter level of a first control loop to differ from a first target parameter level, and the control loop may, thereby, modify a first welding parameter based on a difference between the first measured parameter level and the first target parameter level. However, the modification to the first welding parameter may create a non-ideal subsequent condition of the weld circuit or the welding operation that causes a second measured parameter level of a second control loop to differ from a second target parameter level. Accordingly, the non-ideal subsequent condition may cause the second control loop to modify a second welding parameter based on a difference between the second measured parameter level and the second target parameter level, and the modification of the second welding parameter may return the weld circuit or the welding operation to the non-ideal initial condition and/or insufficiently correct the non-ideal initial condition such that the first and second welding parameters are repeatedly modified (e.g., until either or both of the first and second welding parameters reach an equilibrium level).

For example, in a welding system wherein an initial target voltage (e.g., a setpoint) of a voltage-controlled mode of a welding operation is a predetermined welding parameter (e.g., a standard target voltage associated with a specific type of welding operation), an unexpectedly large amount of resistance in a weld circuit may cause the predetermined target voltage to be insufficiently low to create a welding arc having a target arc length of an arc length-controlled mode of the welding operation. Because heat output of a welding arc being a function of current, and because the target voltage and the unexpectedly large amount of resistance are fixed values, the insufficiently low level of the initial target voltage may cause the output current of welding power of the welding operation to melt an electrode at a rate insufficient for establishing an arc length equal to and/or within a range of the target arc length. Accordingly, a first control loop of an arc length-controlled mode may increase a pulse width of voltage pulses of one or more pulse cycles due to a short circuit duration of a short circuit event exceeding a target short circuit duration of the arc length-controlled mode (e.g., because the insufficiently low melting rate of the electrode causes the arc length to be less than the target arc length). However, as the increase in pulse width implemented by the first control loop increases arc length, an electrode extension length of the weld circuit may decrease, e.g., due to a contact tip to work distance remaining substantially constant as the arc length increases. A decrease in electrode extension length may decrease a resistance of the weld circuit (e.g., due to a lesser volume of the electrode being present in the weld circuit), and so the decreased electrode extension length may cause a measured peak voltage of the voltage pulses to decrease. Accordingly, to maintain the measured peak voltage at the target voltage, a second control loop of the voltage-controlled mode may increase an output current of the voltage pulses to maintain the measured peak voltage at a level equal to and/or within a range of the (insufficiently low) target voltage. However, despite the increase in pulse width, the decrease in output current may cause the electrode to once again melt at an insufficiently low rate and, thereby, cause the arc length to once again become less than the target arc length. Accordingly, the first and second control loops may repeatedly increase pulse width and decrease output current until repetitive welding parameter modification of each welding parameter ceases, e.g., at pulse width and/or output current levels insufficient for proper transfer of a molten ball from the electrode.

By comparing one or more welding parameters (e.g., an output current) to a predetermined welding parameter range (e.g., a predetermined peak current range, a predetermined background current range) and/or one or more predetermined welding parameter thresholds, disclosed example systems, methods, and control circuitry identify when repetitive welding parameter modification is occurring or is likely to begin occurring. For example, if an insufficiently low target voltage of a voltage-controlled mode control loop causes the voltage-controlled mode control loop and a short circuit duration control loop to undergo repetitive welding parameter modification by repeatedly decreasing an output current, some disclosed systems, in response to identifying that the output current is outside of a predetermined current range or lower than a threshold current, increase the target voltage. In some such examples, by increasing the target voltage, the target voltage can be brought to a sufficient level that does not cause the voltage-controlled mode control loop and the short circuit duration control loop to undergo repetitive welding parameter modification. Accordingly, by, e.g., increasing or decreasing one or more target welding parameters of one or more welding parameter-controlled modes in response to identifying that repetitive welding parameter modification, some disclosed systems, methods, and control circuitry can limit, prevent, and/or cease repetitive welding parameter modification. Accordingly, in response to identifying that one or more measured welding parameters are outside of a predetermined welding parameter range and/or that one or more measured welding parameters are less than and/or greater than one or more threshold welding parameters, disclosed example systems, methods, and control circuitry modifying one or more welding parameters (e.g., a target welding parameter) of a welding waveform and/or a welding pulse cycle to limit, prevent, and/or cease repetitive welding parameter modification.

Disclosed example welding systems comprise: power conversion circuitry configured to convert input power to welding power and to output the welding power to a weld circuit; a current sensor configured to measure a current of the weld circuit and generate a current sensor signal; and control circuitry configured to: control the power conversion circuitry to output the welding power according to one or more first pulse cycles at least by outputting the welding power in a voltage-controlled mode according to one or more first target peak voltages during at least a portion of a peak phase of the one or more first pulse cycles; monitor the current sensor signal during at least a portion of at least one of the one or more first pulse cycles to determine one or more measured currents; determine a second target peak voltage based on the one or more measured currents and a predetermined current range; and control the power conversion circuitry to output the welding power according to one or more second pulse cycles at least by outputting the welding power in the voltage-controlled mode according to the second target peak voltage during at least a portion of a peak phase of the one or more second pulse cycles.

In some example welding systems, the control circuitry is further configured to, in response to determining that at least one of the one or more measured currents are greater than the predetermined current range, calculate the second target peak voltage by decreasing at least one of the one or more first target peak voltages.

In some example welding systems, the control circuitry is further configured to, in response to determining that at least one of the one or more measured currents are less than the predetermined current range, calculate the second target peak voltage by increasing at least one of the one or more first target peak voltages.

In some example welding systems, the one or more first pulse cycles comprise an initial first pulse cycle and a subsequent first pulse cycle; and the control circuitry is further configured to: monitor the current sensor signal during at least a portion of the initial first pulse cycle to determine an initial measured current of the one or more measured currents; and monitor the current sensor signal during at least a portion of the subsequent first pulse cycle to determine a subsequent measured current of the one or more measured currents. In some such example welding systems, the control circuitry is further configured to: in response to determining that both the initial measured current and the subsequent measured current are greater than the predetermined current range, calculate the second target peak voltage by decreasing at least one of the one or more first target peak voltages; and in response to determining that both the initial measured current and the subsequent measured current are less than the predetermined current range, calculate the second target peak voltage by increasing at least one of the one or more first target peak voltages.

In some example welding systems, the one or more first pulse cycles comprise an initial first pulse cycle and a subsequent first pulse cycle; the one or more first pulse cycles further comprise one or more intermediary first pulse cycles; and the control circuitry is further configured to: monitor the current sensor signal during at least a portion of the initial first pulse cycle to determine an initial measured current of the one or more measured currents; control the power conversion circuitry to output the welding power according to the one or more intermediary first pulse cycles after controlling the power conversion circuitry to output the welding power according to the initial first pulse cycle; control the power conversion circuitry to output the welding power according to the subsequent first pulse cycle after controlling the power conversion circuitry to output the welding power according to the one or more intermediary first pulse cycles; and monitor the current sensor signal during at least a portion of the subsequent first pulse cycle to determine a subsequent measured current of the one or more measured currents.

In some example welding systems, the one or more first pulse cycles comprise an initial first pulse cycle and a subsequent first pulse cycle; and the control circuitry is further configured to: monitor the current sensor signal during at least a portion of the initial first pulse cycle to determine an initial measured current of the one or more measured currents; control the power conversion circuitry to output the welding power according to the subsequent first pulse cycle directly after controlling the power conversion circuitry to output the welding power according to the initial first pulse cycle; and monitor the current sensor signal during at least a portion of the subsequent first pulse cycle to determine a subsequent measured current of the one or more measured currents.

In some example welding systems, the welding system further comprises a voltage sensor configured to measure a voltage of the weld circuit and generate a voltage sensor signal; and the control circuitry is further configured to: control the power conversion circuitry to output the welding power according to one or more initial first pulse cycles of the one or more first pulse cycles, the one or more initial first pulse cycles having one or more initial first pulse parameters; monitor the voltage sensor signal during a background phase of at least one of the one or more initial first pulse cycles to determine one or more short circuit parameters of one or more short circuit events; determine one or more subsequent first pulse parameters based on the one or more initial first pulse parameters and the one or more short circuit parameters; and control the power conversion circuitry to output the welding power according to one or more subsequent first pulse cycles of the one or more first pulse cycles, the one or more subsequent first pulse cycles having the one or more subsequent first pulse parameters.

In some such example welding systems, the determining of the one or more subsequent first pulse parameters comprises comparing the one or more short circuit parameters to one or more target short circuit parameters.

In some example welding systems, the welding system further comprises a voltage sensor configured to measure a voltage of the weld circuit and generate a voltage sensor signal; and the control circuitry is further configured to: control the power conversion circuitry to output the welding power according to one or more initial first pulse cycles of the one or more first pulse cycles, the one or more initial first pulse cycles having one or more initial first pulse parameters; monitor the voltage sensor signal during a background phase of at least one of the one or more initial first pulse cycles to determine one or more short circuit parameters of one or more short circuit events; determine one or more subsequent first pulse parameters based on the one or more initial first pulse parameters and the one or more short circuit parameters; and control the power conversion circuitry to output the welding power according to one or more subsequent first pulse cycles of the one or more first pulse cycles, the one or more subsequent first pulse cycles having the one or more subsequent first pulse parameters. In some such example welding systems, the determining of the one or more subsequent first pulse parameters comprises comparing the one or more short circuit parameters to one or more target short circuit parameters.

In some example welding systems, the welding system further comprises a voltage sensor configured to measure a voltage of the weld circuit and generate a voltage sensor signal; and the control circuitry is further configured to: control the power conversion circuitry to output the welding power according to one or more initial first pulse cycles of the one or more first pulse cycles, the one or more initial first pulse cycles having one or more initial first pulse parameters; monitor the voltage sensor signal during a background phase of at least one of the one or more initial first pulse cycles to determine one or more short circuit parameters of one or more short circuit events, the one or more short circuit parameters comprising a short circuit duration; determine one or more subsequent first pulse parameters based on the one or more initial first pulse parameters and the one or more short circuit parameters; and control the power conversion circuitry to output the welding power according to one or more subsequent first pulse cycles of the one or more first pulse cycles, the one or more subsequent first pulse cycles having the one or more subsequent first pulse parameters. In some such example welding systems, the one or more initial first pulse parameters comprise at least one of an initial pulse width, an initial pulse frequency, an initial wire feed speed, an initial ramping up rate, an initial ramping down rate, an initial target peak voltage, an initial target peak current, an initial target background voltage, an initial target background current, an initial target power, an initial target resistance, or an initial target enthalpy; and the one or more subsequent first pulse parameters comprise at least one of a subsequent pulse width, a subsequent pulse frequency, a subsequent wire feed speed, a subsequent ramping up rate, a subsequent ramping down rate, a subsequent target peak voltage, a subsequent target peak current, a subsequent target background voltage, a subsequent target background current, a subsequent target power, a subsequent target resistance, or a subsequent target enthalpy.

In some example welding systems, the welding system further comprises a voltage sensor configured to measure a voltage of the weld circuit and generate a voltage sensor signal; and the control circuitry is further configured to: control the power conversion circuitry to output the welding power according to one or more initial first pulse cycles of the one or more first pulse cycles, the one or more initial first pulse cycles having one or more initial first pulse parameters comprising an initial pulse width; monitor the voltage sensor signal during a background phase of at least one of the one or more initial first pulse cycles to determine one or more short circuit parameters of one or more short circuit events, the one or more short circuit parameters comprising a short circuit duration; determine one or more subsequent first pulse parameters comprising a subsequent pulse width based on the one or more initial first pulse parameters and the one or more short circuit parameters, the determining comprising: in response to determining that the short circuit duration is greater than a target short circuit duration, calculate the subsequent pulse width by increasing the initial pulse width based on a difference between the short circuit duration and the target short circuit duration; and in response to determining that the short circuit duration is less than the target short circuit duration, calculate the subsequent pulse width by decreasing the initial pulse width based on the difference between the short circuit duration and the target short circuit duration; and control the power conversion circuitry to output the welding power according to one or more subsequent first pulse cycles of the one or more first pulse cycles, the one or more subsequent first pulse cycles having the one or more subsequent first pulse parameters.

In some example welding systems, the welding system further comprises a voltage sensor configured to measure a voltage of the weld circuit and generate a voltage sensor signal; and the control circuitry is further configured to: control the power conversion circuitry to output the welding power according to one or more initial first pulse cycles of the one or more first pulse cycles, the one or more initial first pulse cycles having one or more initial first pulse parameters comprising an initial target peak voltage of the one or more first peak voltages; monitor the voltage sensor signal during a background phase of at least one of the one or more initial first pulse cycles to determine one or more short circuit parameters of one or more short circuit events, the one or more short circuit parameters comprising a short circuit duration; determine one or more subsequent first pulse parameters comprising a subsequent target peak voltage of the one or more first target voltages based on the one or more initial first pulse parameters and the one or more short circuit parameters, the determining comprising: in response to determining that the short circuit duration is greater than a target short circuit duration, calculate the subsequent target peak voltage by increasing the initial target peak voltage based on a difference between the short circuit duration and the target short circuit duration; and in response to determining that the short circuit duration is less than the target short circuit duration, calculate the subsequent target peak voltage by decreasing the initial target peak voltage based on the difference between the short circuit duration and the target short circuit duration; and control the power conversion circuitry to output the welding power according to one or more subsequent first pulse cycles of the one or more first pulse cycles, the one or more subsequent first pulse cycles having the one or more subsequent first pulse parameters.

In some example welding systems, the one or more measured currents comprise at least one of: one or more measured peak currents measured during the peak phase of at least one of the one or more first pulse cycles; one or more measured background currents measured during a background phase of at least one of the one or more first pulse cycles; one or more measured ramping up currents measured during a ramping up period of at least one of the one or more first pulse cycles; one or more measured ramping down currents measured during a ramping down period of at least one of the one or more first pulse cycles; or one or more sampled currents measured by sampling the current sensor signal over at least a portion of the one or more first pulse cycles.

In some example welding systems, the control circuitry is configured to: control the power conversion circuitry to output the welding power in the voltage-controlled mode according to one or more first target background voltages during at least a portion of a background phase of the one or more first pulse cycles; monitor the current sensor signal during at least the portion of the background phase of the one or more first pulse cycles to determine one or more second measured currents; determine a second target background voltage based on the one or more second measured currents and a predetermined background current range; and control the power conversion circuitry to output the welding power according to one or more second pulse cycles at least by outputting the welding power in the voltage-controlled mode according to the second target background voltage during at least the portion of the background phase of the one or more second pulse cycles.

Disclosed example welding systems comprise: power conversion circuitry configured to convert input power to welding power and to output the welding power to a weld circuit; a current sensor configured to measure a current of the weld circuit and generate a current sensor signal; and control circuitry configured to: control the power conversion circuitry to output the welding power according to one or more first welding parameters at least by outputting the welding power in a voltage-controlled mode according to one or more first target voltages during at least a portion of one or more first waveforms of the one or more first welding parameters; monitor the current sensor signal during at least a portion of the one or more first waveforms to determine one or more measured currents; determine a second target voltage based on the one or more measured currents and a predetermined current range; and to output the welding power according to one or more second welding parameters at least by outputting the welding power in the voltage-controlled mode according to the second target voltage during at least a portion of a second waveform of the one or more second welding parameters.

In some example welding systems, the power conversion circuitry is configured to output the welding power according to at least one of: a gas-metal arc welding (GMAW) or metal inert gas welding (MIG) operation; a pulsed gas-metal arc welding (GMAW-P) or pulsed metal inert gas (MIG) welding operation; a current-controlled welding operation; a voltage-controlled welding operation; a power-controlled welding operation; a resistance-controlled welding operation; an enthalpy-controlled welding operation; a tungsten inert gas welding (TIG) or gas tungsten arc welding (GTAW) operation; a flux cored arc welding (FCAW) operation; a shielded metal arc welding (SMAW) or stick welding operation; a plasma cutting operation; a plasma welding operation; a spray welding operation; a short circuit transfer welding operation; a pulse welding operation; or a pulsed spray welding operation.

In some example welding systems, the control circuitry is further configured to: in response to determining that at least one of the one or more measured currents are greater than the predetermined current range, calculate the second target voltage by decreasing at least one of the one or more first target voltages; and in response to determining that at least one of the one or more measured currents are less than the predetermined current range, calculate the second target voltage by increasing at least one of the one or more first target voltages.

In some example welding systems, the one or more first waveforms comprise an initial first waveform and a subsequent first waveform; and the control circuitry is further configured to: monitor the current sensor signal during at least a portion of the initial first waveform to determine an initial measured current of the one or more measured currents; monitor the current sensor signal during at least a portion of the subsequent first waveform to determine a subsequent measured current of the one or more measured currents; in response to determining that both the initial measured current and the subsequent measured current are greater than the predetermined current range, calculate the second target voltage by decreasing at least one of the one or more first target voltages; and in response to determining that both the initial measured current and the subsequent measured current are less than the predetermined current range, calculate the second target voltage by increasing at least one of the one or more first target voltages.

In some example welding systems, a voltage sensor configured to measure a voltage of the weld circuit and generate a voltage sensor signal; the control circuitry is further configured to: control the power conversion circuitry to output the welding power according to one or more initial first welding parameters of the one or more first welding parameters, the one or more initial first welding parameters comprising an initial first waveform of the one or more first waveforms; monitor the voltage sensor signal during at least a portion of the initial first waveform to determine one or more short circuit parameters of one or more short circuit events; determine one or more subsequent first welding parameters of the one or more first welding parameters based on the one or more initial first welding parameters and the one or more short circuit parameters; and control the power conversion circuitry to output the welding power according to the one or more subsequent first welding parameters of the one or more first welding parameters.

In some example welding systems, the one or more initial first welding parameters comprise at least one of an initial ramping up rate, an initial wire feed speed, an initial ramp down rate, an initial target voltage, an initial target current, an initial target power, an initial target resistance, an initial target enthalpy, an initial duration of a phase of a waveform, an initial duration of a portion of a waveform, or an initial waveform frequency; and the one or more subsequent first welding parameters comprise at least one of a subsequent ramping up rate, a subsequent ramping down rate, a subsequent wire feed speed, a subsequent target voltage, a subsequent target current, a subsequent target power, a subsequent target resistance, a subsequent target enthalpy, a subsequent duration of a phase of a waveform, a subsequent duration of a portion of a waveform, or a subsequent waveform frequency.

As used herein, the term "welding parameter-controlled mode" (as in, e.g., a "voltage-controlled mode," a "current-controlled mode," a "power-controlled mode," a "resistance-controlled mode," an "enthalpy-controlled mode," etc.) refers to an operating mode of one or more components, systems, and/or processes of a welding operation (e.g., of power conversion circuitry, a generator, one or more other sources of welding power, a wire feeder, control circuitry, etc.) wherein one or more welding parameters are controlled and/or otherwise modified based on a difference between one or more measured welding parameters and one or more respective target welding parameters (e.g., one or more target values, one or more target threshold values, one or more target ranges of values, etc.). For example, when controlling power conversion circuitry to output welding power to a weld circuit in a voltage-controlled mode, control circuitry may control the power conversion circuitry to increase or decrease an output current (e.g., a number of amps) of the power conversion circuitry and/or one or more other welding parameters based on a difference between a measured voltage of the weld circuit and a target voltage.

As used herein, a "target" welding parameter (e.g., a "target voltage," a "target current," a "target power," a "target resistance," a "target enthalpy," etc.) refers to one or more inputs associated with a welding parameter according to which a welding system operating in a controlled mode (e.g., a voltage-controlled mode, a current-controlled mode, a power-controlled mode, an enthalpy-controlled mode, a resistance-controlled mode, etc.) controls and/or otherwise modifies one or more other welding parameters based on differences between a measured welding parameter and the target welding parameter. A target welding parameter may include one or more values (e.g., 24V), one or more value ranges (e.g., 23V-25V), one or more threshold values (e.g., ≥ 23V, < 25V), etc.

As used herein, a welding parameter "setpoint" (e.g., a voltage setpoint, a current setpoint, a power setpoint, a resistance setpoint, an enthalpy setpoint, a wire feed speed setpoint, etc.) refers to an input (e.g., one or more voltage values, one or more current values, one or more power values, one or more resistance values, one or more enthalpy values, one or more wire feed speed values, etc.) to a device and/or system of a welding system (e.g., a power converter, a wire feeder, a welding torch, a power source, etc.), e.g., via a user interface, network communication, weld procedure specification, or other selection method.

As used herein, the term "pulse cycle" refers to a group two or more phases according to which a welding operation is conducted, wherein one or more welding parameters are varied between at least two phases. For example, a pulse cycle may comprise a peak phase and a background phase, and a target peak voltage of the peak phase may be greater than a target background voltage of the background phase. A pulse cycle may include, e.g., one or more background phases, one or more peak phases, one or more wetting phases, one or more dabbing phases, one or more intermediate phases, and/or one or more other phases.

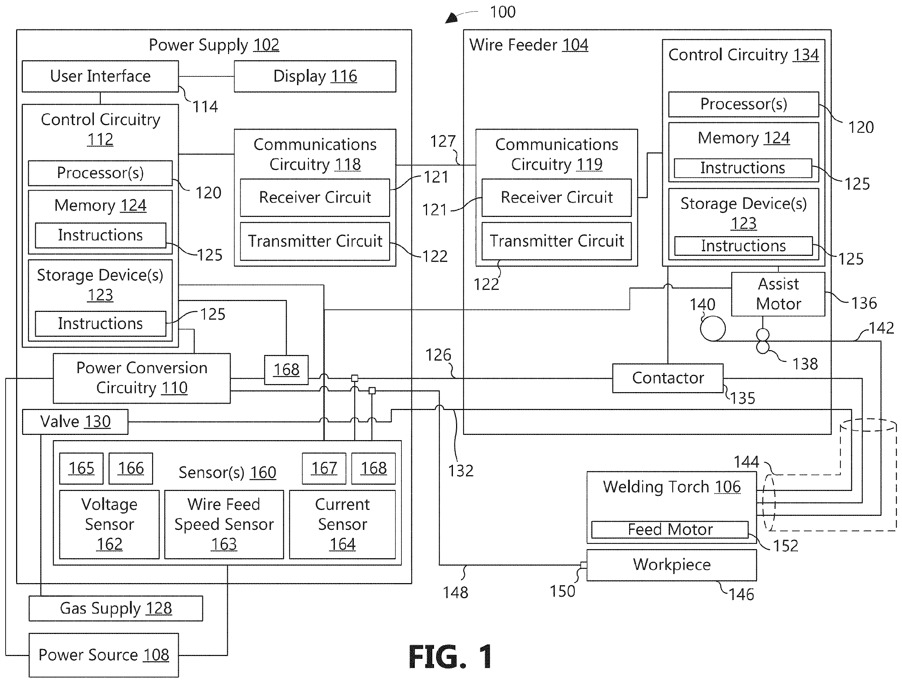

Turning now to the drawings, FIG. 1 is a block diagram of an example system 100. The system 100 is a welding system having a power supply 102, a wire feeder 104, and a welding torch 106. The system 100 powers, controls, and supplies consumables (e.g., an electrode) to a welding application. In some examples, the power supply 102 directly supplies input power to the welding torch 106. The welding torch 106 may be a torch configured for one or more welding modes, such as any, some, or all of GMAW/MIG, GMAW-P/pulsed MIG, SMAW/stick welding, current-controlled welding, voltage-controlled welding, enthalpy-controlled welding, power-controlled welding, resistance-controlled welding, TIG/GTAW, FCAW, plasma cutting, plasma welding, spray welding, short circuit transfer welding, pulse welding, pulsed spray welding, and/or one or more other welding modes based on the desired welding application.

In the example illustrated in FIG. 1, the power supply 102 is configured to supply welding power to the wire feeder 104, and the wire feeder 104 may be configured to route the welding power to the welding torch 106. In some examples, the wire feeder 104 also provides an electrode 142 (e.g., welding wire) to the welding torch 106, and the welding torch 106 may provide the welding power to the electrode 142, e.g., to create and/or maintain a welding arc between the electrode 142 and a workpiece 146. In addition to supplying an input power and/or the electrode 142 to the welding torch 106, the wire feeder 104 may supply a filler metal to a welding torch 106 for various welding applications (e.g., GMAW). While example of the system 100 depicted in FIG. 1 includes the wire feeder 104 (e.g., for GMAW operations), the wire feeder 104 may be replaced by any other type of remote accessory device, such as a stick welding and/or TIG welding remote control interface that provides stick and/or TIG welding.

The power supply 102 receives input power from a power source 108 (e.g., an engine, an electric motor, a generator, an AC power grid, a battery, one or more other energy-generating or - storage devices, and/or any combination thereof), conditions the input power, and provides an output power to one or more welding devices in accordance with demands of the system 100. The power source 108 may be supplied from an offsite location (e.g., the input power may originate from the power grid). The power supply 102 includes power conversion circuitry 110, which may include transformers, rectifiers, switches, and so forth, capable of converting the AC input power to AC and/or DC output power as dictated by the demands of the system 100 (e.g., particular welding processes and regimes) and/or by one or more aspects of the input power (e.g., frequency, voltage, current, etc.).

The power conversion circuitry 110 can convert input power (e.g., the input power received from the power source 108 as AC power) to welding power (e.g., DC power) and output the welding power to a weld circuit. For example, the power conversion circuitry 110 may output welding power to a weld circuit defined, at least in part, by the electrode 142 and the workpiece 146. In some examples, the power conversion circuitry 110 may output welding power based on one or more target weld parameters (e.g., one target welding parameter, a plurality of target welding parameters associated with one or more respective and/or distinct time values, etc.) to control the weld parameter according to the target value. For example, the power conversion circuitry 110 may output welding power based on one or more target voltages, one or more target currents, one or more target powers, one or more target resistances, one or more target enthalpies, and/or one or more other target welding parameters. In some examples, a target welding parameter may be determined and/or modified by, e.g., one or more control loops (e.g., when power conversion circuitry is operating in a voltage-controlled mode, a current-controlled mode, an enthalpy-controlled mode, a power-controlled mode, a resistance-controlled mode, etc.), control circuitry, one or more setpoints, etc. In some examples, the power conversion circuitry 110 is configured to convert the input power received from the power source 108 to both welding power and one or more auxiliary power outputs. An auxiliary power may include, e.g., an arc starting power (e.g., a power configured to initiate an arc between the electrode 142 and the workpiece 146) and/or an input power for a one or more auxiliary devices (e.g., a sensor, a computing device, a light, a grinder, etc.).

The power supply 102 includes control circuitry 112 to control the operation of the power supply 102. The power supply 102 also includes a user interface 114. The control circuitry 112, which is also referred to as a "controller," receives input from the user interface 114, through which a user may choose a process and/or input desired parameters (e.g., voltages, currents, resistances, enthalpies, powers, wire feed speeds, short circuit durations, arc lengths, one or more other setpoints, particular pulsed or non-pulsed welding regimes, and so forth). The user interface 114 may receive inputs using any input device, such as via a keypad, keyboard, buttons, touch screen, voice activation system, wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the system 100, such as the wire feeder 104. For example, in some situations, the power supply 102 wirelessly communicates with other welding devices within the system 100. Further, in some situations, the power supply 102 communicates with other welding devices using a wired connection, such as by using a network interface controller (NIC) to communicate data via a network (e.g., ETHERNET, 10baseT, 10base100, etc.). In the example of FIG. 1, the control circuitry 112 communicates with the wire feeder 104 via the weld circuit via communications circuitry 118, as described below.

The control circuitry 112 includes at least one controller or processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors ("DSPs").

The example control circuitry 112 includes one or more storage device(s) 123 and one or more memory device(s) 124. The storage device(s) 123 (e.g., nonvolatile storage, one or more non-transitory computer-readable medium(s)) may include ROM, flash memory, a hard drive, and/or any other suitable optical, magnetic, and/or solid-state storage medium(s), and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch (e.g., the welding torch 106), a distance between the contact tip and a workpiece (e.g., the workpiece 146), a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage). Furthermore, in some examples, welding data is provided with the weld cable 126 such that welding power and weld data are provided and transmitted together over the weld cable 126. The communications circuitry 118 may be communicatively coupled to the weld cable 126 to communicate (e.g., send/receive) data over the weld cable 126. The communications circuitry 118 may be implemented based on various types of power line communications methods and techniques. For example, the communications circuitry 118 may utilize IEEE standard P1901.2 to provide data communications over the weld cable 126. In this manner, the weld cable 126 may be utilized to provide welding power from the power supply 102 to the wire feeder 104 and the welding torch 106. Additionally or alternatively, a communication cable 127 may be used to transmit and/or receive data communications between the communications circuitry 118 and a similar communications circuitry 119 of the wire feeder 104.

The example communications circuitry 118 includes a receiver circuit 121 and a transmitter circuit 122. Generally, the receiver circuit 121 receives data transmitted by the wire feeder 104 and the transmitter circuit 122 transmits data to the wire feeder 104. In some examples, the receiver circuit 121 receives communication(s) via the weld circuit while weld current is flowing through the weld circuit (e.g., during a welding operation) and/or after the weld current has stopped flowing through the weld circuit (e.g., after a welding operation).

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable 132 (which in some implementations may be packaged with the welding power output) to the wire feeder 104 which provides the shielding gas to the welding application. In some examples, the system 100 does not include the gas supply 128, the valve 130, and/or the cable 132.

In some examples, the wire feeder 104 uses the welding power to power the various components in the wire feeder 104, such as to power a wire feeder control circuitry 134. As noted above, the weld cable 126 may be configured to provide or supply the welding power. The power supply 102 may also communicate with a communications circuitry 119 of the wire feeder 104 using the weld cable 126 and the communications circuitry 118 disposed within the power supply 102. In some examples, the communications circuitry 119 is substantially similar or identical in construction and/or function as the communications circuitry 118 of the power supply 102. The wire feeder control circuitry 134 controls the operations of the wire feeder 104. In some examples, the wire feeder 104 uses the wire feeder control circuitry 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder control circuitry 134 and configured to enable or inhibit welding power to continue to flow to the weld cable 126 for the welding application. In some examples, the contactor 135 is an electromechanical device. However, the contactor 135 may be any other suitable device, such as a solid-state device, and/or may be omitted when the power supply 102 is configured to control the output of welding power to the welding torch 106. The control circuitry 112 and/or the wire feeder control circuitry 134 may control the contactor 135 to close and/or open to provide power to the welding torch 106. The wire feeder 104 includes an assist motor 136 that receives control signals from the wire feeder control circuitry 134 to drive rollers 138 that rotate to pull the electrode 142 (e.g., welding wire) off a spool 140. The spool 140 may be, e.g., a spool of wire when the electrode 142 is welding wire. The spool 140 may be any mechanically-retrievable storage mechanism for the electrode 142. The electrode 142 is provided to the welding application through a torch cable 144. Likewise, the wire feeder 104 may provide the shielding gas from the cable 132 through the torch cable 144. The electrode 142, the shield gas, and the power from the weld cable 126 may be bundled together in a single one of the torch cable 144, in multiple ones of the torch cable 144, and/or individually provided to the welding torch 106.

The welding torch 106 delivers the electrode 142, welding power, and/or shielding gas for a welding application. The welding torch 106 is used to establish a welding arc between the welding torch 106 and the workpiece 146. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

The example welding torch 106 includes a feed motor 152, which is configured to pull the electrode 142 from the wire feeder 104 to the welding torch 106 to feed the wire to a welding arc during welding operations. The feed motor 152 may be controlled to advance the electrode 142 at one or more wire feed speeds. The feed motor 152 may also be controlled to hold the electrode 142 in a stopped condition. When controlled to hold the electrode 142 in a stopped condition, the feed motor 152 is controlled to neither advance nor retract the electrode 142 relative to the feed motor 152. Rather, when controlled to hold the electrode 142 in the stopped condition, the feed motor 152 is controlled to hold the electrode 142 in place relative to the feed motor 152. Changing wire speeds may be used in some welding processes to reduce spatter and/or achieve desired welding results.

The assist motor 136 may operate as an assist motor to pull the electrode 142 from the spool 140 and feed the electrode 142 toward the welding torch 106, while the example feed motor 152 advances the electrode 142 and/or holds the electrode 142 in a stopped condition to control short circuiting and/or arc length during welding. In examples, either or both the feed motor 152 and/or the assist motor 136 are not capable of retracting the electrode 142. In other examples, either or both of the feed motor 152 and/or the assist motor 136 are capable of retracting the electrode 142. In some examples, the welding torch 106 does not include the feed motor 152. In some examples, the wire feeder 104 does not include the assist motor 136.

The example power supply 102 includes and/or is communicatively coupled to one or more sensors 160. Each of the one or more sensors 160 measure one or more parameters (e.g., an aspects, a quality, a state, etc.) of one or more devices, systems, components, etc. of the system 100 and/or of power (e.g., input power), received by and/or output by the system 100 and/or one or more devices, systems, components, etc. thereof.

In the example of FIG. 1, the one or more sensors 160 include a voltage sensor 162. The voltage sensor 162 measures a voltage (e.g., an output voltage from the power supply 102 and/or a voltage from one or more other points and/or components of the weld circuit) and generates a voltage sensor signal which includes a measured voltage (e.g., measured in volts ("V")). The voltage sensor 162 provides the voltage sensor signal to the control circuitry 112, e.g., such that the control circuitry 112 may monitor the voltage sensor signal and, thereby, the measured voltage. The output voltage of the power supply 102 may be controlled by the power conversion circuitry 110, an external voltage source, an external current source, and/or load, and/or any other internal or external cause of voltage. The voltage sensor 162 may include, e.g., a voltmeter, a feedback loop, etc. While the example of the voltage sensor 162 is illustrated in FIG. 1 as monitoring the output voltage from the power conversion circuitry 110, the voltage sensor 162 may be configured to monitor any voltage from the output terminals of the power supply 102 and/or for any particular circuits.

In the example of FIG. 1, the one or more sensors 160 include a wire feed speed sensor 163. The wire feed speed sensor 163 measures a wire feed speed (e.g., a speed at which the wire feeder 104 feeds the electrode 142 to the welding torch 106) and generates a wire feed speed sensor signal which includes a measured wire feed speed (measured in, e.g., meters per second ("mps"), inches per minute ("ipm"), etc.). The wire feed speed sensor 163 provides the wire feed speed sensor signal to the control circuitry 112, e.g., such that the control circuitry 112 may monitor the wire feed speed sensor signal and, thereby, the measured wire feed speed. The wire feed speed of the wire feeder 104 may be controlled by the feed motor 152 and/or assist motor 136. The wire feed speed sensor 163 may include, e.g., a photoelectric speed sensor, a tachometer, an encoder, etc. While the example of the wire feed speed sensor 163 is illustrated in FIG. 1 as monitoring the wire feed speed from the assist motor 136, the wire feed speed sensor 163 may be configured to monitor the wire feed speed at the feed motor 152 and/or at any point along the electrode 142 and/or portion of the electrode 142.

In the example of FIG. 1, the one or more sensors 160 include a current sensor 164. The current sensor 164 measures a current (e.g., an output current from the power supply 102 and/or a current from one or more other points and/or components of the weld circuit) and generates a current sensor signal which includes a measured current (e.g., measured in amps ("A")). The current sensor 164 provides the current sensor signal to the control circuitry 112, e.g., such that the control circuitry 112 may monitor the current sensor signal and, thereby, the measured current. The output current of the power supply 102 may be controlled by the power conversion circuitry 110, an external voltage source, current source, and/or load, and/or any other internal or external cause of current. The current sensor 164 may include, e.g., an ammeter, a feedback loop, etc. While the example of the current sensor 164 is illustrated in FIG. 1 as monitoring the output current from the power conversion circuitry 110, the current sensor 164 may be configured to monitor any currents flowing through the output terminals of the power supply 102 and/or for any particular circuits.

In some examples, the one or more sensors 160 include any, some, or all of the sensors 162, 163, 164. In some examples, the one or more sensors 160 additionally and/or alternatively include one or more other sensors, such as a power source sensor 165, an audio sensor 166, a spectrometer 167, and/or one or more weld circuit sensors 168. In some examples, the power source sensor 165 is configured to measure a state (e.g., a load, control of an inverter, etc.) of the power source 108 (e.g., an engine, an electric motor, etc.) and generate a power source sensor signal which includes a measured state. In some examples, the audio sensor 166 is configured to measure audio feedback of the system 100 (e.g., sounds produced by a welding operation, an arc between the electrode 142 and the workpiece 146, etc.) and generate an audio sensor signal which includes a measured audio feedback. In some examples, the spectrometer 167 is configured to measure a spectrographic emission (e.g., color and/or luminosity of light) of a welding arc of a weld circuit of the system 100 and generate a spectrometer signal which includes a measured spectrographic emission. In some examples, the one or more weld circuit sensors 168 may include one or more sensors configured to measure one or more welding parameters (e.g., electromagnetic measurements) of weld power output by the power supply 102 and/or of the weld circuit and generate one or more weld circuit sensor signals which include one or more measured welding parameters (e.g., voltage, current, power, resistance, enthalpy, frequency, etc.).

The control circuitry 112 may control one or more components, devices, systems, etc. of the system 100 (e.g., the power conversion circuitry 110, the wire feeder 104, and/or the welding torch 106) according to one or more welding parameters. As used herein, the term "welding parameter" includes any measurable, modifiable, configurable, or otherwise controllable aspect, output, or process of a welding system during one or more time intervals of some or all of a welding operation (e.g., a GMAW/MIG operation, a GMAW-P/pulsed MIG operation, an SMAW/stick welding operation, a current-controlled welding operation, an enthalpy-controlled welding operation, a power-controlled welding operation, a resistance-controlled welding operation, a voltage-controlled welding operation, a TIG/GTAW welding operation, an FCAW operation, a plasma cutting operation, a plasma welding operation, a spray welding operation, a short circuit transfer welding operation, a pulse welding operation, a pulsed spray welding operation, and/or one or more other welding modes). For example, the term "welding parameter" can include one or more voltages (measured in, e.g., volts ("V")) of a weld circuit and/or of welding power output by power conversion circuitry (e.g., a target voltage, a measured voltage, a determined voltage, an output voltage, etc.), one or more currents (measured in, e.g., amps ("A")) of a weld circuit and/or of welding power output by power conversion circuitry (e.g., a target current, a measured current, a determined current, an output current, etc.), one or more frequencies (measured in, e.g., hertz ("Hz")) of a weld circuit and/or of welding power output by power conversion circuitry (e.g., a target frequency, a measured frequency, a determined frequency, an output frequency, etc.), one or more powers (measured in, e.g., watts ("W")) of a weld circuit and/or of welding power output by power conversion circuitry (e.g., a target power, a measured power, a determined power, an output power, etc.), one or more resistances (measured in, e.g., ohms) of a weld circuit (e.g., a target resistance, a measured resistance, a determined resistance, etc.), one or more enthalpies (measured in, e.g., Joules ("J")) of a weld circuit and/or of welding power output by power conversion circuitry (e.g., a target enthalpy, a measured enthalpy, a determined enthalpy, an output enthalpy, etc.), one or more wire feed speeds (measured in, e.g., meters per second ("mps"), inches per minute ("ipm"), etc.) of a wire feeder (e.g., a target wire feed speed, a measured wire feed speed, an output wire feed speed, etc.), a ramping up rate (e.g., a rate at which a voltage, current, power, resistance, enthalpy, etc. is increased from one value to a target value and/or to a setpoint value) of welding power output by power conversion circuitry, a ramping down rate (e.g., a rate at which a voltage, current, power, resistance, enthalpy, etc. is decreased from one value to a target value and/or to a setpoint value) of welding power output by power conversion circuitry, one or more other measurable electric and/or electromagnetic aspects of a weld circuit or welding power output by power conversion circuitry, one or more short circuit durations of one or more short circuits of a weld circuit (e.g., a measured short circuit duration, a predetermined short circuit duration, a target short circuit duration, a determined short circuit duration, etc.), one or more arc lengths of a welding arc of a weld circuit (e.g., a measured arc length, a predetermined arc length, a target arc length, a determined arc length, etc.), one more welding waveforms, one more welding waveforms, one or more durations of a phase of a waveform, one or more durations of one or more other portions of a waveform (e.g., a wavelength of a welding waveform, one or more durations of one or more intervals and/or portions of a welding waveform, etc.), one or more waveform frequencies (e.g., a number of one or more intervals and/or portions of a welding waveform that occur in a set amount of time, etc.), one or more operating modes of power conversion circuitry (e.g., a voltage-controlled mode, a current-controlled mode, a power-controlled mode, a resistance-controlled mode, an enthalpy-controlled mode, etc.), one or more pulse parameters of one or more pulse cycles, and/or one or more other measurable, modifiable, configurable, or otherwise controllable aspects, outputs, and/or processes of a welding system (e.g., the system 100).

As used herein, the term "pulse parameter" includes one or more welding parameters of one or more pulse cycles (e.g., one or more pulse cycles according to which the control circuitry 112 controls the power conversion circuitry 110 to output welding power) of a welding operation (e.g., a pulsed welding operation, a GMAW/MIG operation, a GMAW-P/pulsed MIG operation, a pulsed spray welding operation, and/or one or more other welding modes). For example, the term "pulse parameter" can include one or more pulse widths (e.g., a duration of a peak phase of a pulse cycle), one or more pulse frequencies (e.g., a number of pulses occurring in a set amount of time), one or more target peak voltages (e.g., a target voltage of at least a portion of a peak phase of a pulse cycle), one or more target background voltages (e.g., a target voltage of at least a portion of a background phase of a pulse cycle), one or more other target voltages (e.g., one or more target voltages of one or more phases of a pulse cycle), one or more target peak currents (e.g., a target current of at least a portion of a peak phase of a pulse cycle), one or more target background currents (e.g., a target current of at least a portion of a background phase of a pulse cycle), one or more other target currents (e.g., one or more target currents of one or more phases of a pulse cycle), one or more ramping up rates (e.g., a ramping up rate of a beginning of a peak phase as a welding parameter is controlled to increase from a target background value to a target peak value), one or more ramping down rates (e.g., a ramping down rate of a beginning of a background phase as a welding parameter is controlled to decrease from a target peak value to a target background value), one or more target powers (e.g., a peak power, a background power, etc.), one or more target resistances (e.g., a peak resistance, a background resistance, etc.), one or more target enthalpies (e.g., a peak enthalpy, a background enthalpy, etc.), one or more other target values (e.g., any measurable value of a weld circuit, of welding power output by power conversion circuitry, and/or of a welding operation), and/or one or more other measurable and/or modifiable aspects, processes, and/or values of one or more pulse cycles.

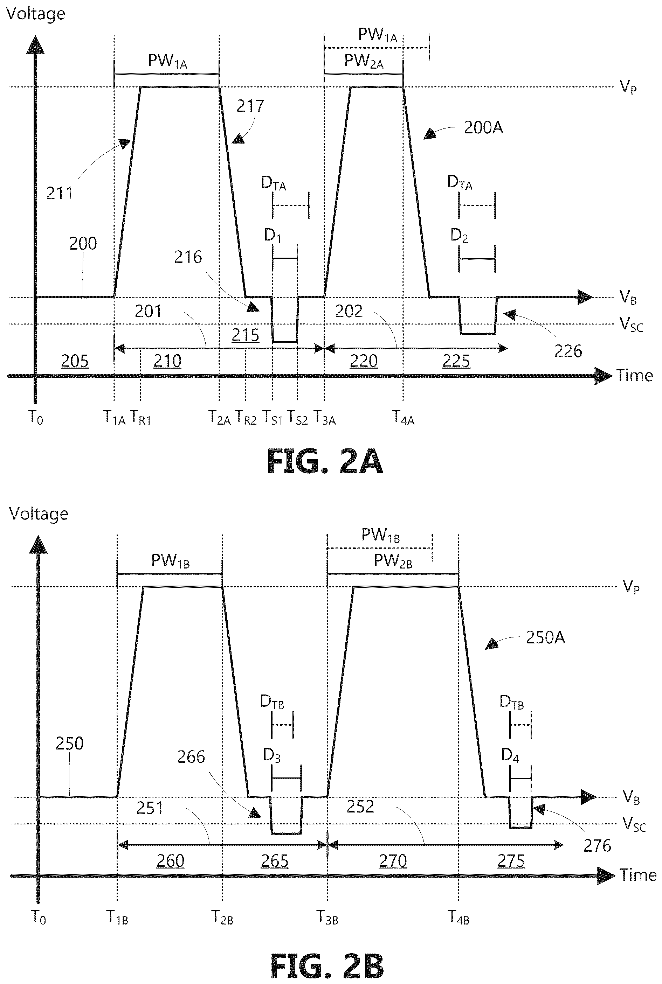

FIGS. 2A and 2B depicts graphs (x-axis: time; y-axis: voltage) of an example of a waveform 200A of a voltage 200 (e.g., a target voltage commanded by the control circuitry 112, a measured voltage measured by the voltage sensor 162, etc.) and an example of a waveform 250A of a voltage 250 of the system 100 (e.g., a target voltage commanded by the control circuitry 112, a measured voltage measured by the voltage sensor 162, etc.) during example pulse cycles. The waveforms 200A, 250A are depicted in FIGS. 2A and 2B as including substantially constant values and substantially constant rates of change during some time intervals, but such depictions are for illustrative purposes only. In some examples, a current and/or voltage (e.g., measured by either or both of the sensors 162, 164) may vary during one or more time intervals in one or more ways not depicted in and/or indicated by FIG. 2A and/or FIG. 2B. For example, relative proportions of voltage levels (e.g., target peak voltages, target background voltages, voltage levels of short circuits, voltage levels of anomalous cathode events, etc.), voltage rates of change (e.g. one or more ramping up rates, one or more ramping down rates, one or more rates of change to or from voltage levels of a short circuit, etc.), or durations (e.g., durations of one or more peak phases, durations of one or more background phases, durations of one or more short circuits, etc.) depicted in FIG. 2A and/or FIG. 2B are purely illustrative and may, in various embodiments, vary from the relative proportions depicted in FIG. 2A and/or FIG. 2B.

In FIG. 2A, a first pulse cycle 201 starts at a first time (T_{1A}) and ends at a third time (T_{3A}). The first pulse cycle 201 is followed by a second pulse cycle 202 that starts at the third time (T_{3A}). The first pulse cycle 201 includes a first peak phase 210, from the first time (T₁₄) to a second time (T_{2A}), and a first background phase 215, from the second time (T_{2A}) to the third time (T_{3A}). The second pulse cycle 202 includes a second peak phase 220, from the third time (T_{3A}) to a fourth time (T_{4A}), and a second background phase 225, starting at a fourth time (T_{4A}). Each of the peak phases 210, 220 are defined by a pulse width indicated, in the first peak phase 210, by a first pulse width (PW_{1A}) and, in the second peak phase 220, by a second pulse width (PW_{2A}). Each of the peak phases 210, 220 are defined by a target peak voltage, indicated by a peak voltage (V_{P}) (e.g., a target voltage of the peak phases 210, 220). Each of the background phases 215, 225 are defined by a background phase duration and a target background voltage, indicated by a background voltage (V_{B}) (e.g., a target voltage of the background phases 215, 225).

In FIG. 2B, a first pulse cycle 251 starts at a first time (T_{1B}) and ends at a third time (T_{3B}). The first pulse cycle 251 is followed by a second pulse cycle 252 that starts at the third time (T_{3B}). The first pulse cycle 251 includes a first peak phase 260, from the first time (T_{1B}) to a second time (T_{2B}), and a first background phase 265, from the second time (T_{2B}) to the third time (T_{3B}). The second pulse cycle 252 includes a second peak phase 270, from the third time (T_{3B}) to a fourth time (T_{4B}), and a second background phase 275, starting at a fourth time (T_{4B}). Each of the peak phases 260, 270 are defined by a pulse width indicated, in the first peak phase 260, by a first pulse width (PW_{1B}) and, in the second peak phase 270, by a second pulse width (PW_{2B}). Each of the peak phases 260, 270 are defined by a target peak voltage, indicated by a peak voltage (V_{P}) (e.g., a target voltage of the peak phases 260, 270). Each of the background phases 265, 275 are defined by a background phase duration and a target background voltage, indicated by a background voltage (V_{B}) (e.g., a target voltage of the background phases 265, 275).

While FIGS. 2A and 2B depict each of the peak phases 210, 220, 260, 270 as having the same peak voltage (V_{P}) and each of the background phases 215, 225, 265, 275 as having the same background voltage (V_{B}), in some examples one or more peak phases of one or more pulse cycles may have one or more different target peak voltages and/or one or more background phases of one or more pulse cycles may have one or more different target background voltages. While FIGS. 2A and 2B depict each of the background phases 215, 265 as having the same background phase duration, in some examples one or more background phases of one or more pulse cycles may have one or more different background phase durations. In some examples, one or more peak phases may have one or more target peak currents, one or more target peak voltages, one or more target peak enthalpies, one or more target peak resistances, one or more target peak powers, and/or one or more other target peak values in addition to and/or alternative to one or more target peak voltages. In some examples, one or more background phases may have one or more target background currents, one or more target background enthalpies, one or more target background resistances, one or more target background powers, and/or one or more other target background values in addition to and/or alternative to one or more target background voltages.

Referring to FIGS. 2A and 2B, and with reference to FIG. 1, the control circuitry 112 may control the power conversion circuitry 110 to output welding power in a voltage-controlled mode, a current-controlled mode, a power-controlled mode, an enthalpy-controlled mode, a resistance-controlled mode, and/or one or more other controlled modes during at least one or more portions of one or more phases (e.g., any, some, or all of the phases 210, 215, 220, 225, 260, 265, 270, 275, one or more other peak phases, one or more other background phases, one or more other phases, etc.), one or more portions of one or more pulse cycles (e.g., the pulse cycles 201, 202, 251, 252, one or more other pulse cycles, etc.), one or more portions of one or more welding waveforms, and/or one or more other portions of a welding operation (e.g., GMAW, GMAW-P, TIG, FCAW, SMAW, plasma cutting, plasma welding, spray welding, short circuit transfer welding, pulse welding, pulsed spray welding, etc.). When controlling the power conversion circuitry 110 to output welding power in, e.g., a voltage-controlled mode, the control circuitry 112 controls the power conversion to increase or decrease the output current (e.g., measured in amps) and/or one or more other welding parameters (e.g., power, resistance, enthalpy, etc.) of the power conversion circuitry 110 based on a difference between measured voltage (e.g., measured by the voltage sensor 162) and a target voltage. When controlling the power conversion circuitry 110 to output welding power in, e.g., a current-controlled mode, the control circuitry 112 controls the power conversion circuitry 110 to increase or decrease the output voltage (e.g., measured in volts) and/or one or more other welding parameters (e.g., power, resistance, enthalpy, etc.) of the power conversion circuitry 110 based on the difference between a measured current (e.g., measured by the current sensor 164) and a target current.

In some examples, the control circuitry 112 controls the power conversion circuitry 110 to output welding power in a first controlled mode (e.g., a current-controlled mode) during a first portion of a pulse cycle and in a second controlled mode (e.g., a voltage-controlled mode) during a second portion of a pulse cycle. In some such examples, the control circuitry 112 controls the power conversion circuitry 110 to output welding power in a first controlled mode (e.g., a current-controlled mode) during some or all of a ramping up period of a phase (e.g., as voltage transitions from a target background voltage to a target peak voltage in a beginning of a peak phase) and in a second controlled mode (e.g., a voltage-controlled mode) during some or all of a remainder of the phase (e.g., a remaining portion of a peak phase between a ramping up period and a subsequent phase). For example, in the first pulse cycle 201 of FIG. 2A, the control circuitry 112 controls the power conversion circuitry 110 to output welding power in a current-controlled mode during some or all of a ramping up period 211 from the first time (T_{1A}) until a first ramp time (T_{R1}), and, also in the example of FIG. 2A, the control circuitry 112 controls the power conversion circuitry 110 to output welding power in a voltage-controlled mode for some or all of a portion of the first peak phase 210 between the first ramp time (T_{R1}) and the second time (T_{2A}). The ramping up period 211 may include some or all of a period of the first peak phase 210 in which the voltage 200 changes from the background voltage (V_{B}) of an initial background phase 205 to the peak voltage (V_{P}) of the first peak phase 210. In some additional and/or alternative examples, the control circuitry 112 controls the power conversion circuitry 110 to output welding power in a first controlled mode (e.g., a current-controlled mode) during some or all of a ramping down period of a phase (e.g., as voltage transitions from a target peak voltage to a target background voltage in a beginning of a background phase) and in a second controlled mode (e.g., a voltage-controlled mode) during some or all of a remainder of the phase (e.g., a remaining portion of a background phase between a ramping down period and a subsequent phase). For example, in the first pulse cycle 201 of FIG. 2A, the control circuitry 112 controls the power conversion circuitry 110 to output welding power in a current-controlled mode during some or all of a ramping down period 217 from the second time (T_{2A}) until a second ramp time (T_{R2}), and, also in the example of FIG. 2A, the control circuitry 112 controls the power conversion circuitry 110 to output welding power in a voltage-controlled mode for some or all of a portion of the first background phase 215 between the second ramp time (T_{R2}) and the third time (T_{3A}). The ramping down period 217 may include some or all of a period of the first background phase 215 in which the voltage 200 changes from the peak voltage (V_{P}) of the first peak phase 210 to the background voltage (V_{B}) of the first background phase 215.

Referring to FIG. 2A, and with reference to FIG. 1, in some examples, the control circuitry 112 may determine whether a short circuit event (e.g., a molten ball briefly joining the electrode 142 and the workpiece 146) has occurred in one or more ways. In some examples, the control circuitry 112 monitors one or more sensor signals (e.g., a sensor signal generated by the voltage sensor 162) to determine whether a short circuit event has occurred by detecting that a measured voltage is less than a short circuit detection voltage threshold (V_{SC}). The short circuit detection voltage threshold (V_{SC}) may be a predetermined voltage level that is, e.g., less than the background voltage (V_{B}).

For example, the control circuitry 112 determines that a first short circuit event 216 has occurred by detecting the voltage 200 as being less than the short circuit detection voltage threshold (V_{SC}) during the first background phase 215. In the example of FIG. 2A, the control circuitry 112 determines a short circuit duration of the first short circuit event 216 as being an amount of time between a short circuit start time (T_{S1}) and a short circuit end time (T_{S2}) determined by the control circuitry 112. In some examples, the control circuitry 112 may determine the short circuit start time (T_{S1}) as being a time at which the voltage 200 is first measured as being less than the short circuit detection voltage threshold (V_{SC}). In some examples, the control circuitry 112 may determine the short circuit end time (T_{S2}) as being a time at which the voltage 200 returns to the background voltage (V_{B}), returns to being within a predetermined proximity (e.g., a percentage, a number of volts, etc.) of the background voltage (V_{B}), and/or returns to being greater than the short circuit detection voltage threshold (Vsc). In some examples, the short circuit end time (T_{S2}) is detected when the voltage 200 has exceeded the short circuit detection threshold (V_{SC}) and/or one or more other voltage thresholds for at least a threshold time duration or threshold number of samples (e.g., discrete measured voltage values measured by the voltage sensor 162).

In some examples, the short circuit end time (T_{S2}) is detected when the voltage 200 has exceeded one or more threshold voltages other than and/or in addition to the short circuit detection threshold (V_{SC}). In some examples, the control circuitry 112 detects the short circuit end time (T_{S2}) when the voltage 200 has returned to the background voltage (V_{B}). In some examples, the control circuitry 112 detects the short circuit end time (T_{S2}) when the voltage 200 has exceeded an arc detection voltage (e.g., a voltage level different than the short circuit detection threshold (V_{SC})). For example, the control circuitry 112 may determine the arc detection voltage based on a current (e.g., a measured current, target current, output current, etc.) and/or one or more other welding parameters of the welding power output by the power conversion circuitry 110 and/or of the weld circuit, e.g., by calculating and/or modifying the arc detection voltage as a function of the magnitude of the current as the current initiates and/or changes over time.

In response to determining that a short circuit event has occurred, the control circuitry 112 may determine one or more short circuit parameters (e.g., a short circuit duration, a short circuit voltage level, etc.) of a short circuit event (e.g., based on the one or more sensor signals). The control circuitry 112 may compare the one or more short circuit parameters to one or more target short circuit parameters (e.g., a target short circuit duration, a target short circuit voltage level, etc.). A target short circuit parameter may comprise a single value, a range of values, and/or one or more other pluralities of values. The target short circuit parameter may be a setpoint, input via the user interface 114, determined by the control circuitry 112, etc. The target short circuit parameter may correspond to a target arc length (e.g., a setpoint target arc length, a target arc length input via the user interface 114, a target arc length determined by the control circuitry 112, etc.). Accordingly, by comparing the one or more short circuit parameters to one or more target short circuit parameters, the control circuitry 112 can determine an arc length of a welding arc of the weld circuit and control and/or modify the arc length by controlling one or more aspects of the system 100 (e.g., welding parameters, pulse parameters, etc.) based on a difference between the one or more short circuit parameters and the one or more target short circuit parameters.

In some examples, the control circuitry 112 determines, based, at least in part, on the one or more short circuit parameters, one or more welding parameters, such as one or more wire feed speeds, one or more durations of one or phases of a waveform, one or more durations of one or more portions of a waveform, one or more waveform frequencies, one or more ramping up rates, one or more ramping down rates, one or more target pulse parameters, one or more target voltages, one or more target currents, one or more target powers, one or more target enthalpies, one or more target resistances, one or more other target welding parameters, one or more pulse parameter setpoints, one or more voltage setpoints, one or more current setpoints, one or more power setpoints, one or more enthalpy setpoints, one or more resistance setpoints, one or more other welding parameter setpoints, and/or one or more other welding parameters. In some examples, the control circuitry 112 determines, based, at least in part, on the one or more short circuit parameters, one or more pulse parameters, such as one or more pulse widths, one or more pulse frequencies, one or more ramping up rates, one or more ramping down rates, one or more target peak voltages, one or more target background voltages, one or more other target voltages, one or more target peak currents, one or more target background currents, one or more other target currents, one or more target powers, one or more target enthalpies, one or more target resistances, one or more other target values, and/or one or more other pulse parameters.

In the example of FIG. 2A, in response to detecting the first short circuit event 216, the control circuitry 112 determines a first short circuit duration (D₁) (e.g., an amount of time between the short circuit start time (T_{S1}) and the short circuit end time (T_{S2})). The control circuitry 112 compares the first short circuit duration (D₁) to a first target short circuit duration (D_{TA}). In response to identifying that the first short circuit duration (D₁) is less than the first target short circuit duration (D_{TA}) (e.g., indicating that an arc length of a welding arc of the weld circuit is greater than a target arc length), the control circuitry 112 calculates the second pulse width (PW_{2A}) of the second peak phase 220 by decreasing the first pulse width (PW_{1A}) of the first peak phase 210. By decreasing from the first pulse width (PW_{1A}) to the second pulse width (PW₂₄), the control circuitry 112 may increase a short circuit duration of a subsequent short circuit relative to the first short circuit duration (D₁) (e.g., intending for the arc length of the welding arc to decrease).

For example, in the second background phase 225, decreasing from the first pulse width (PW_{1A}) to the second pulse width (PW_{2A}) can be seen to result in a second short circuit duration (D₂) of a second short circuit event 226 that is greater than the first short circuit duration (D₁) and, in the example of FIG. 2A, equal to the first target short circuit duration (D_{TA}). In some examples, in response to identifying that the first short circuit duration (D₁) is less than the first target short circuit duration (D_{TA}), the control circuitry 112 additionally and/or alternatively controls and/or modifies one or more other welding parameters and/or pulse parameters. For example, in response to identifying that a short circuit duration is less than a target short circuit duration, the control circuitry 112 may decrease a target peak voltage, decrease one or more other target voltages, decrease a target peak current, decrease one or more other target currents, decrease a waveform frequency, decrease a pulse frequency, modify one or more durations of one or phases of a waveform, modify one or more durations of one or more portions of a waveform, decrease a pulse width, decrease a ramping up rate (e.g., of a peak phase), increase a ramping down rate (e.g., of a background phase), and/or modify one or more other welding parameters.

In the example of FIG. 2B, in response to detecting a third short circuit event 266, the control circuitry 112 determines a third short circuit duration (D₃), and the control circuitry 112 compares the third short circuit duration (D₃) to a second target short circuit duration (D_{TB}). In response to identifying that the third short circuit duration (D₃) is greater than the second target short circuit duration (D_{TB}) (e.g., indicating that an arc length of a welding arc of the weld circuit is less than a target arc length), the control circuitry 112 increases a pulse width of the voltage 200 by determining the second pulse width (PW_{2B}) of the second peak phase 270, which is greater than the first pulse width (PW_{1B}) of the first peak phase 260. By increasing from the first pulse width (PW_{1B}) to the second pulse width (PW_{2B}), the control circuitry 112 may decrease a short circuit duration of a subsequent short circuit relative to the third short circuit duration (D₃) (e.g., indicating that the arc length of the welding arc of the weld circuit has increased).

For example, in the second background phase 275, increasing from the first pulse width (PW_{1B}) to the second pulse width (PW_{2B}) can be seen to result in a fourth short circuit duration (D₄) of a fourth short circuit 276 that is less than the third short circuit duration (D₃) and, in the example of FIG. 2B, equal to the second target short circuit duration (D_{TB}). In some examples, in response to identifying that the third short circuit duration (D₃) is greater than the second target short circuit duration (D_{TB}), the control circuitry 112 additionally and/or alternatively controls and/or modifies one or more other welding parameters and/or pulse parameters. For example, in response to identifying that a short circuit duration is greater than a target short circuit duration, the control circuitry 112 may increase a target peak voltage, increase one or more other target voltages, increase a target peak current, increase one or more other target currents, increase a waveform frequency, increase a pulse frequency, modify one or more durations of one or more phases of a waveform, modify one or more durations of one or more portions of a waveform, increase a pulse width, increase a ramping up rate (e.g., of a peak phase), decrease a ramping down rate (e.g., of a background phase), and/or modify one or more other welding parameters.

In some examples, the control circuitry 112 may additionally and/or alternatively determine whether a short circuit event has occurred by comparing one or more measurements of one or more other parameters (e.g., one or more parameters in addition to and/or alternative to voltage) to one or more other short circuit detection thresholds. In some examples, the control circuitry 112 may determine a determined voltage (based on, e.g., a current measured by the current sensor 164) rather than measure a measured voltage, and, in some such examples, the control circuitry 112 may compare the determined voltage to the short circuit detection voltage threshold (V_{SC}). In some examples, the short circuit detection voltage threshold (V_{SC}) may be a predetermined value (e.g., a setpoint), a value received via the communications circuitry 118, and/or a value received via the user interface 114. In some examples, the control circuitry 112 may determine the short circuit detection voltage threshold (V_{SC}) based on one or more welding parameters of the welding power, such as by calculating the short circuit detection voltage threshold (V_{SC}) as a percentage of the background voltage (V_{B}), as a percentage of the peak voltage (V_{P}), as a predetermined amount less than the background voltage (V_{B}), and/or as a predetermined amount less than the peak voltage (V_{P}).

In some examples, the target short circuit duration (D_{T}) and/or one or more other target welding parameters and/or target short circuit parameters may comprise single value, a range of values, and/or one or more other pluralities of values. For example, a target short circuit duration may be determined by a single value (e.g., 0.5 milliseconds) in addition to a difference magnitude threshold (e.g., a percentage of the single value), and the control circuitry 112 may not modify one or more welding parameters even if a measured short circuit duration is unequal to the single value of the target short circuit duration if the measured short circuit duration nonetheless differs from the single value by less than the difference magnitude threshold.

In some examples, the control circuitry 112 may additionally and/or alternatively determine that a short circuit event has occurred based on one or more other measurements (e.g., measured by any, some, or all of the sensors 164, 165, 166, 167, 168), thresholds, and/or detected events. For example, the control circuitry 112 may additionally and/or alternatively determine that a short circuit event has occurred based on a power source response short circuit indication, an audio short circuit indication, a spectrographic short circuit indication, and/or one or more other indications.

In some examples, the one or more sensors 160 include the power source sensor 165, which is configured to measure a state and/or parameter of the power source 108 and/or the power conversion circuitry 110 and generate a power source sensor signal comprising a measured power source response. A measured power source response may be used to detect a short circuit event by detecting, e.g., a load change on the power source 108 and/or on the power conversion circuitry 110 (as indicated by, e.g., an inverter of the power conversion circuitry 110), a change in rpm or torque of an engine or motor of the power source 108, and/or one or more other changes and/or indications. In some examples, the control circuitry 112 may monitor a power source sensor signal generated by the power source sensor 165 (e.g., during a background phase of a pulse cycle) to determine whether a short circuit event occurred by detecting a power source response short circuit indication. In some examples, in response to determining that a short circuit event occurred by detecting a power source response short circuit indication, the control circuitry 112 determines one or more short circuit parameters (e.g., a short circuit duration) based on the power source sensor signal, a predetermined short circuit duration (e.g., a predetermined short circuit duration associated with the power source response short circuit indication), and/or on one or more other factors.

In some examples, the one or more sensors 160 include the audio sensor 166 (e.g., a microphone), which is configured to measure audio feedback of the system 100 (e.g., sounds produced by the welding torch 106, a welding arc, the power source 108, the power supply 102, and/or the wire feeder 104) and generate an audio sensor signal comprising a detected audio (e.g., a decibel level, a sound profile, an audio frequency spectrum, etc.). Detected audio may be used to detect a short circuit event by detecting, e.g., a sound signature and/or signature frequency spectrum produced by a short circuit between the electrode 142 and the workpiece 146, a sound signature and/or signature frequency spectrum produced by a load change on the power conversion circuitry 110 and/or the power source 108, and/or one or more other sounds. In some examples, the control circuitry 112 may monitor an audio sensor signal generated by the audio sensor 166 (e.g., during a background phase of a pulse cycle) to determine whether a short circuit event occurred by detecting an audio short circuit indication. In some examples, in response to determining that a short circuit event occurred by detecting an audio short circuit indication, the control circuitry 112 determines one or more short circuit parameters (e.g., a short circuit duration) based on the audio sensor signal, a predetermined short circuit duration (e.g., a predetermined short circuit duration associated with the audio short circuit indication), and/or on one or more other factors.

In some examples, the one or more sensors 160 include the spectrometer 167, which is configured to measure a spectrographic emission (e.g., light) of (e.g., produced) by a welding arc between the electrode 142 and the workpiece 146 and generate a spectrometer signal comprising a measured spectrographic emission. A measured spectrographic emission (e.g., an emitted light spectrum) may be used to detect a short circuit event by detecting, e.g., level(s) and/or frequencies of light indicating that a short circuit has occurred. In some examples, the control circuitry 112 may monitor a spectrometer signal generated by the spectrometer 167 (e.g., during a background phase of a pulse cycle) to determine whether a short circuit event occurred by detecting a spectrographic short circuit indication. In some examples, in response to determining that a short circuit event occurred by detecting a spectrographic short circuit indication, the control circuitry 112 determines one or more short circuit parameters (e.g., a short circuit duration) based on the spectrometer signal, a predetermined short circuit duration (e.g., a predetermined short circuit duration associated with the spectrographic short circuit indication), and/or on one or more other factors.

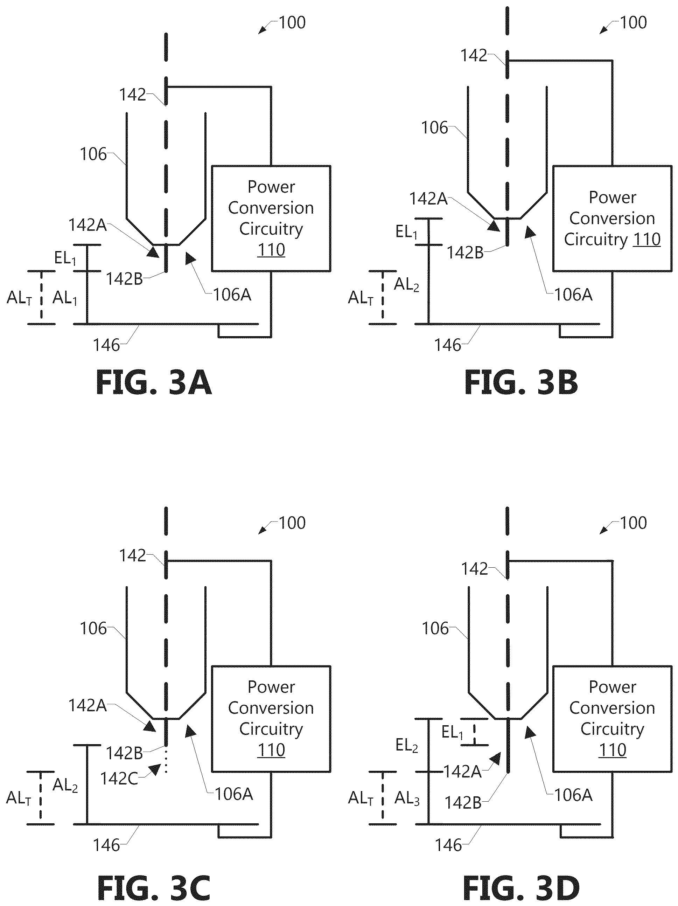

FIGS. 3A-3D depict the welding torch 106 and the electrode 142 of FIG. 1 more closely to illustrate an example of modifying one or more welding parameters to control an arc length. In FIGS. 3A-3D, an electrode extension 142A of the electrode 142 is a portion of the electrode 142 which extends beyond a contact tip 106A of the welding torch 106. In the example of FIG. 3A, the electrode extension 142A has a first electrode extension length (EL₁) (e.g., a length of the electrode 142 between the contact tip 106A and a tip 142B of the electrode extension 142A). In the example of FIG. 3A, the position of the contact tip 106A relative to the workpiece 146 and the first electrode extension length (EL₁) provide a first arc length (AL₁) (e.g., a distance between the tip 142B of the electrode extension 142A and the workpiece 146) equal to a target arc length (AL_{T}) (e.g., a selected, determined, calculated, ideal, and/or desired value or range of values of arc lengths of the system 100).

In the example of FIG. 3B, however, the contact tip 106A has moved further from the workpiece 146 than in the example of FIG. 3A, while the first electrode extension length (EL₁) remains the same. Accordingly, in the example of FIG. 3B, the position of the contact tip 106A relative to the workpiece 146 and the first electrode extension length (EL₁) provide a second arc length (AL₂) greater than the target arc length (AL₁). Because the second arc length (AL₂) is greater than the first arc length (AL₁), durations of short circuit events (e.g., following a pulse phase of a pulse cycle) between the electrode extension 142A and the workpiece 146 generally shorten in duration, as molten metal being transferred from the electrode extension 142A to the workpiece 146 joins each together for shorter periods of time. For example, surface tension of the molten metal can keep the electrode extension 142A and the workpiece 146 connected. However, as the arc length lengthens, the surface tension of the molten metal may become more stressed while connecting the electrode extension 142A and the workpiece 146 and, thereby, reducing an amount of time the electrode extension 142A is connected to the workpiece 146 (e.g., a short circuit duration). Accordingly, shorter short circuit durations can indicate longer arc lengths, and longer short circuit durations can indicate shorter arc lengths. By selecting, determining, or otherwise utilizing a target short circuit duration corresponding to a target arc length, measured short circuit durations may be compared to the target short circuit duration as a proxy for measuring arc length.

In the example of FIG. 3C, the control circuitry 112, based on one or more short circuit durations of one or more short circuit events between the electrode extension 142A and the workpiece 146, determines one or more welding parameters configured to elongate the electrode extension 142A by an additional length 142C. For example, and with reference to FIG. 2A, the control circuitry 112 may decrease a pulse width from the first pulse width (PW_{1A}) to the second pulse width (PW2A) to elongate the electrode extension 142A. In some examples, by decreasing a target peak voltage, decreasing one or more other target voltages, decreasing a target peak current, decreasing one or more other target currents, decreasing a waveform frequency, decreasing a pulse frequency, modifying one or more durations of one or more phases of a waveform, modifying one or more durations of one or more portions of a waveform, decreasing a pulse width, decreasing a ramping up rate (e.g., of a peak phase), and/or increasing a ramping down rate (e.g., of a background phase) while maintaining a substantially constant wire feed speed, the length of the electrode extension 142A can be increased by decreasing a rate at which the electrode 142 melts, thereby providing a greater amount of time for the electrode 142 to travel beyond the contact tip 106A prior to melting into the workpiece 146. Conversely, by, e.g., increasing a target peak voltage, increasing one or more other target voltages, increasing a target peak current, increasing one or more other target currents, increasing a waveform frequency, increasing a pulse frequency, modifying one or more durations of one or more phases of a waveform, modifying one or more durations of one or more portions of a waveform, increasing a pulse width, increasing a ramping up rate (e.g., of a peak phase), and/or decreasing a ramping down rate (e.g., of a background phase) while maintaining a substantially constant wire feed speed, the length of the electrode extension 142A can be decreased by increasing a rate at which the electrode 142 melts. Accordingly, by comparing the duration of a measured short circuit duration to a target short circuit duration, the control circuitry 112 can determine that the second arc length (AL₂) is unequal to the target arc length (AL_{T}) and, based on a difference between the measured short circuit duration and target short circuit duration, determine one or more welding parameters to modify to adjust the arc length closer to the target arc length (AL_{T}) and an amount by which each of the one or more welding parameters should be modified.

In the example of FIG. 3D, the control circuitry 112 has modified one or more welding parameters (e.g., by decreasing a pulse width) to slow a rate of melting of the electrode 142. Accordingly, the electrode extension 142A now defines a second electrode extension length (EL₂) longer than the first electrode extension length (EL₁) of FIGS. 3A-3C. By increasing the length of the electrode extension 142A, the tip 142B of the electrode extension 142A and the workpiece 146 now define a third arc length (AL₃) equal to the target arc length (AL₁), even though the contact tip 106A is positioned the same distance from the workpiece 146 as in FIGS. 3B and 3C.

In some examples, the target arc length (AL_{T}) and/or one or more other target arc lengths may comprise single value, a range of values, and/or one or more other pluralities of values. For example, a target arc length may be determined by a single value in addition to a difference magnitude threshold (e.g., a percentage of the single value), and the control circuitry 112 may not modify one or more welding parameters even if an arc length is unequal to the single value of the target arc length if the arc length nonetheless differs from the single value by less than the difference magnitude threshold.

In some examples, a control loop controlling one or more welding parameters based on short circuit duration and/or one or more other welding parameters and/or characteristics of a weld circuit may dampen (e.g., bring closer to a target value), filter (e.g., omit outlier values), weight (e.g., apply a 0.8x multiplier, a 1.2x multiplier, etc. to an influence of an input value), and/or otherwise modify one or more input values of the control loop (e.g., a measured short circuit duration, a predetermined short circuit duration, and/or one or more other short circuit parameters for a short circuit duration control loop, a measured voltage for a control loop of a voltage-controlled mode, etc.) and/or one or more output values of the control loop (e.g., one or more amounts to add to, subtract from, multiply by, etc. pulse width, current, and/or one or more welding parameters). Such dampening, filtering, weighting, modification, etc. may improve the performance of a control loop by, e.g., reducing and/or avoiding overshoot, oscillation, and/or one or more other undesirable effects. For example, referring to FIGS. 3A-3D, a short circuit duration control loop that does not incorporate dampening, filtering, weighting, modification, etc. may cause an arc length to iteratively oscillate between being greater than the target arc length (AL_{T}) and being less than the target arc length (AL_{T}) due to repeated overshooting by the control loop, and such oscillation in arc length may worsen weld quality and/or otherwise negatively affect a welding operation.

Through processes such as those depicted in and described with respect to FIGS. 2A-3D, the control circuitry 112 may control and/or maintain an arc length of a welding arc of the system 100 based on measured short circuit durations of short circuits between the electrode 142 and the workpiece 146. Such processes enable the control circuitry 112 to reduce variations in the arc length of the system 100 even as a distance between the contact tip 106A and the workpiece 146 varies.

However, in some circumstances, modifications of one or more welding parameters by a first control loop (e.g., a control loop of a voltage-controlled mode, a current-controlled mode, a power-controlled mode, a resistance-controlled mode, an enthalpy-controlled mode, etc.), when made in the same welding process as modifications of one or more welding parameters by a second control loop (e.g., a control loop of an arc length-controlled mode), may cause two or more welding parameters to undergo repetitive welding parameter modification by repeatedly increasing and/or repeatedly decreasing the two or more welding parameter modifications. As used herein, a "control loop" refers to a control system which controls one or more outputs (e.g., welding output variables, such as voltage, current, and/or wire feed speed) based on one or more inputs (e.g., one or more setpoints, one or more feedback variables, etc.). Different control loops may share one or more inputs, outputs, and/or feedback variables, but differ in at least one input and/or at least one output.

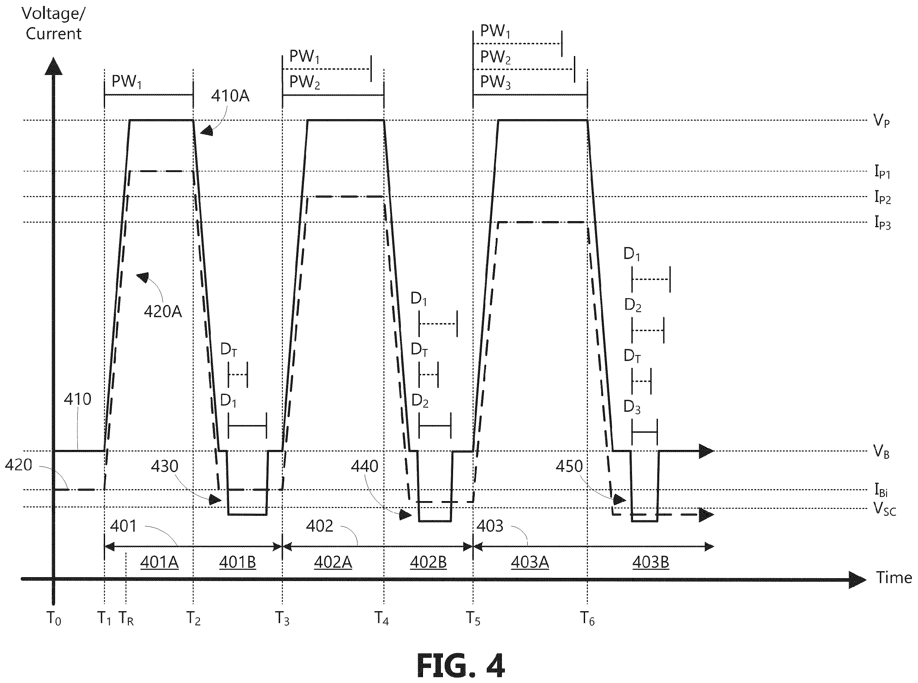

Referring now to FIG. 4, and with reference to FIG. 1, a voltage waveform 410A (denoted, in FIG. 4, by a solid line) of a voltage 410 (e.g., a target voltage commanded by the control circuitry 112, a measured voltage measured by the voltage sensor 162, etc.) and a current waveform 420A (denoted, in FIG. 4, by a dashed line) of a current 420 (e.g., a target current commanded by the control circuitry 112, a measured voltage measured by the voltage sensor 162, etc.) over the course of three pulse cycles. FIG. 4 illustrates an example of repetitive welding parameter modification by a short circuit duration process (e.g., one or more processes described above with respect to FIGS. 2A-3D) repeatedly increasing pulse width while a voltage-control process repeatedly decreases a peak current of the current waveform 520A, e.g., until the pulse width and peak current reach equilibrium level (not depicted in FIG. 4) inufficient for proper transfer of a molten ball from the electrode 142 to the workpiece 146.

A first pulse cycle 401 includes a first peak phase 401A, having a first pulse width (PW₁) from a first time (T₁) to a second time (T₂), and a first background phase 401B. In the first peak phase 401A, after a ramping up period of the first peak phase 401A (e.g., from the first time (T₁) to a ramping time (T_{R})), the control circuitry 112 controls the power conversion circuitry 110 to output welding power in a voltage-controlled mode (e.g., from the ramping time (T_{R}) until a second time (T₂)) according to a peak voltage (V_{P}) (e.g., a target peak voltage of the first peak phase 401A) by controlling the current 420 to be output at a first peak current (I_{P1}). During the first background phase 401B, the control circuitry 112 determines a first short circuit duration (D₁) of a first short circuit event 430 based on the voltage 410 falling from a background voltage (V_{B}) (e.g., a target background voltage of the first background phase 401B) below a short circuit detection voltage threshold (V_{SC}).

In the example of FIG. 4, the peak voltage (V_{P}) is insufficiently low and, thereby, fails to provide enough energy to properly melt and cleanly transfer the electrode 142. A target peak voltage and/or one or more other target welding parameters may be too low and/or too high, e.g., because an initial voltage setpoint was set too low, an inductance and/or resistance of a weld circuit is higher than expected (e.g., due to parts, connections, cables, and/or other imperfections in the weld circuit), an inductance and/or resistance of the weld circuit is varying (e.g., due to a length of the weld circuit increasing across a weld), a contact tip to work distance of the weld circuit increasing and/or decreasing, and/or one or more other changes in and/or conditions of a weld circuit and/or welding operation. Because the peak voltage (V_{P}) is insufficiently low to establish a proper weld transfer and/or a proper arc length, a first short circuit duration (D₁) of the first short circuit event 430 exceeds a target short circuit duration (D_{T}) (e.g., the electrode 142 melts relatively slowly, causing a prolonged contact between the electrode 142 and a weld pool). Accordingly, the control circuitry 112 calculates a second pulse width (PW₂) by increasing the first pulse width (PW₁) to increase a melting speed of the electrode 142 and, thereby, increase an arc length of a welding arc of the weld circuit.

The control circuitry 112 subsequently controls the power conversion circuitry 110 to output a second pulse cycle 402, including a second peak phase 402A having the second pulse width (PW₂). While, in the example of FIG. 4, the increase in pulse width in the second peak phase 402A to the second pulse width (PW₂) extends the arc length, the arc length nonetheless remains insufficiently small. For example, because the control circuitry 112 continues to use the (insufficiently low) peak voltage (V_{P}), the electrode 142 continues to fail to provide a clean transfer of a molten ball to the workpiece. However, because the arc length has increased, resistance in the weld circuit also increases, due to the increased distance between the electrode 142 and the workpiece 146. Accordingly, to keep the voltage 410 at the peak voltage (V_{P}) during the second peak phase 402A, the control circuitry 112 controls the power conversion circuitry 110 to compensate for the added resistance in the weld circuit by outputting the current 420 at a second peak current (IP₂), which is lower than the first peak current (IP₁). In a second background phase 402B of the second pulse cycle 402, the added resistance in the weld circuit also causes the current 420 to lower below an initial background current (I_{Bi}) of the first background phase 401B.

However, because the peak voltage (V_{P}) is insufficiently low, the second pulse width (PW₂) fails to sufficiently increase the arc length. Accordingly, in response to detecting a second short circuit event 440 in the second background phase 402B, the control circuitry 112 determines that a second short circuit duration (D₂) of the second short circuit event 440 is, like the first short circuit duration (D₁), greater than the target short circuit duration (D_{T}). The control circuitry 112 thereby calculates a third pulse width (PW₃) by, yet again, increasing the second pulse width (PW₂), and the control circuitry 112 controls the power conversion circuitry 110 to output a third pulse cycle 403, including a third peak phase 403A having the third pulse width (PW₃). The increased arc length caused by the third pulse width (PW₃) nonetheless further decreases resistance in the weld circuit, and the current 420 is output at a third peak current (I_{P3}) that is less than the second peak current (I_{P2}). In response to detecting a third short circuit event 450 in a third background phase 403B, the control circuitry 112 determines a third short circuit duration (D₃), which, like the short circuit durations (D₁, D₂), is greater than the target short circuit duration (D_{T}).

Accordingly, in some examples, the insufficiently low level of the peak voltage (V_{P}) may cause pulse widths of subsequent pulse cycles to continue to lengthen and peak and background current levels to continue to decrease, as the pulse widths and current levels undergo repetitive welding parameter modification. Such repetitive welding parameter modification may, e.g., continue indefinitely and/or to a point where the long duration of the pulse width and/or the low level of the peak current degrade transfer of metal from the electrode 142 to a weld pool and/or cause other problems in the welding operation. Further, the lengthened pulse widths of subsequent pulse cycles may cause the current to decrease over the duration of the pulse width further degrading the transfer of metal from the electrode 142 to the weld pool and/or cause other problems in the welding operation. A user of the system 100 may attempt to halt the repetitive welding parameter modification by modifying a target peak voltage by increasing a target peak voltage setpoint above the peak voltage (V_{P}), however resolving the repetitive welding parameter modification manually can be time consuming, temporary, and/or ineffective. For example, increasing the target peak voltage may require the user to pause the welding operation (thereby increasing an amount of time the welding operation takes to complete). Furthermore, the increased target peak voltage may only prevent the repetitive welding parameter modification at a substantially constant level of resistance, and so variances in contact tip to work distance (e.g., by the user holding the welding torch 106 unsteadily), increases in weld circuit length, and/or other changes in weld circuit resistance and/or inductance can result in the increased target peak voltage failing to resolve the repetitive welding parameter modification or becoming, once again, too high or too low such that repetitive welding parameter modification begins again.

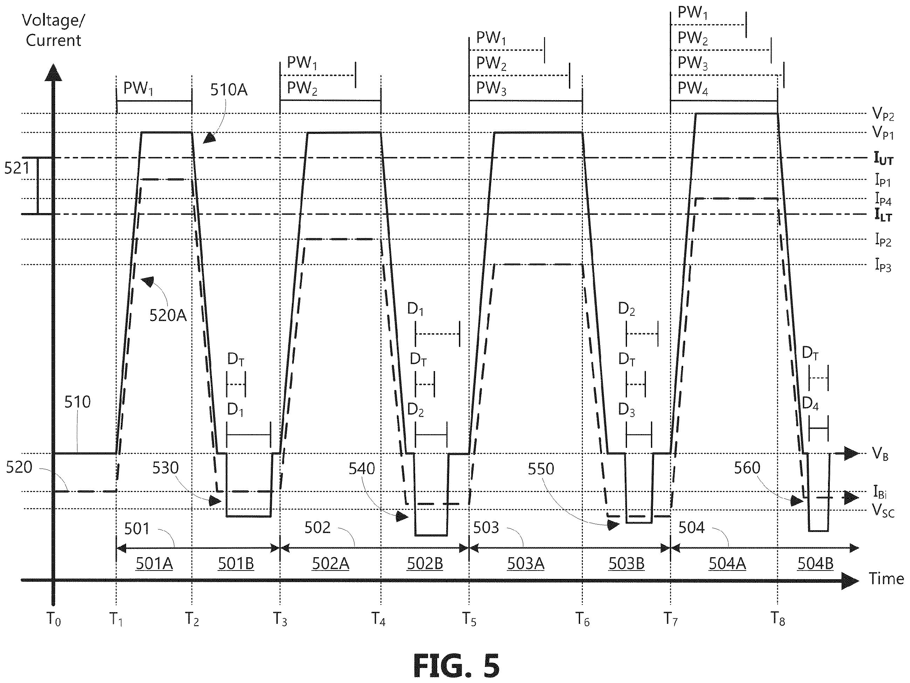

Referring now to FIG. 5, and with reference to FIG. 1, a voltage waveform 510A (denoted, in FIG. 5, by a solid line) of a voltage 510 (e.g., a target voltage commanded by the control circuitry 112, a measured voltage measured by the voltage sensor 162, etc.) and a current waveform 520A (denoted, in FIG. 5, by a dashed line) of a current 520 (e.g., a target current commanded by the control circuitry 112, a measured current measured by the current sensor 164, etc.) can be seen to begin undergoing an example of repetitive welding parameter modification in a manner similar to the example of repetitive welding parameter modification of FIG. 4. However, FIG. 5 illustrates an example of a process for automatic resolution of such repetitive welding parameter modification (e.g., by the control circuitry 112).

In a first peak phase 501A of a first pulse cycle 501, the control circuitry 112 controls the power conversion circuitry 110 to output welding power in a voltage-controlled mode according to a first peak voltage (V_{P1}). However, like the peak voltage (V_{P}) of the example of FIG. 4, the first peak voltage (V_{P1}) is an insufficiently low voltage level. Accordingly, in response to detecting a first short circuit event 530 in a first background phase 501B, the control circuitry 112 determines a first short circuit duration (D₁) that is greater than a target short circuit duration (D_{T}). In response to this determination, in a second peak phase 502A of a second pulse cycle 502 and in a third peak phase 503A of a third pulse cycle 503, the control circuitry 112 increases pulse width from a first pulse width (PW₁) to a second pulse width (PW₂) and, again, to a third pulse width (PW₃), as a second short circuit duration (D₂) of a second short circuit 540 in a background phase 502B of the second pulse cycle 502 is, like the first short circuit duration (D₁), greater than the target short circuit duration (D_{T}). Furthermore, in each of the peak phases 501A, 502A, 503A, the current 520 lowers from a first peak current (I_{P1}) to a second peak current (IP₂) and further lowers to a third peak current (IP₃), as, in each of the peak phases 501A, the control circuitry 112 continues to control the power conversion circuitry 110 to output the welding power in a voltage-controlled mode according to the (insufficiently low) first peak voltage (V_{P1}). Nonetheless, like in the example of FIG. 4, in response to detecting a third short circuit event 550 in a third background phase 503B of the third pulse cycle 503, the control circuitry 112 determines a third short circuit duration (D₃) that, like the short circuit durations (D₁, D₂), is greater than the target short circuit duration (D_{T}).

However, unlike the example of FIG. 4, in the example of FIG. 5, the control circuitry 112 monitors the current 520 during each of the pulse cycles 501, 502, 503 to determine one or more measured currents of each of the peak phases 501A, 502A, 503A. The control circuitry 112 compares the measured currents to a predetermined peak current range 521 defined by an upper threshold peak current (I_{UT}) and a lower threshold peak current (I_{LT}). The predetermined peak current range 521 may be, e.g., a range of currents which provide sufficient conditions for a welding operation, a range of currents determined based on one or more setpoints (e.g., input via the user interface 114), a range of currents calculated based on one or more welding parameters (e.g., a target voltage, a measured resistance and/or a measured enthalpy of the weld circuit, and/or one or more other measured, target, and/or output welding parameters), and/or a range of currents otherwise determined by the control circuitry 112. While the first peak current (I_{P1}) of the first peak phase 501A is within the predetermined peak current range 521 (e.g., less than the upper threshold peak current (I_{UT}) and greater than the lower threshold peak current (I_{LT})), each of the peak currents (IP₂, IP₃) of the peak phases 502A, 503A are less than the lower threshold peak current (I_{LT}) and are, thereby, outside of the predetermined peak current range 521.

In response to determining that each of the peak currents (IP₂, IP₃) of the peak phases 502A, 503A are outside of the predetermined peak current range 521, the control circuitry 112 determines a second peak voltage (V_{P2}). For example, because each of the peak currents (IP₂, IP₃) is lower than the lower threshold peak current (I_{LT}), the control circuitry 112 calculates the second peak voltage (V_{P2}) by increasing the first peak voltage (V_{P1}). In a fourth peak phase 504A of a fourth pulse cycle 504, the control circuitry 112 controls the power conversion circuitry 110 to output welding power in a voltage-controlled mode according to the second peak voltage (V_{P2}). Because the second peak voltage (V_{P2}) is greater than the first peak voltage (V_{P1}), a fourth peak current (I_{P4}) of the fourth peak phase 504A increases relative to the third peak current (I_{P3}) and, in the example of FIG. 5, is within the predetermined peak current range 521. Furthermore, because the second peak voltage (V_{P2}) causes the welding power to apply more heat to the electrode 142 during the fourth peak phase 504A, the arc length of the weld circuit is increased, such that, in a fourth background phase 504B of the fourth pulse cycle 504, a fourth short circuit duration (D₄) of a fourth short circuit 560 is equal to the target short circuit duration (D_{T}).

Accordingly, in some examples, when one or more measured welding parameters (e.g., the peak currents (IP₂, I_{P3})) are outside of a predetermined welding parameter range (e.g., the predetermined peak current range 521) and/or are greater than and/or less than one or more welding parameter thresholds (e.g., less than lower threshold peak current (I_{LT})), the control circuitry 112 identifies that repetitive welding parameter modification (e.g., repeated decreases of an output current) may be beginning to occur and/or occurring due to a first target welding parameter (e.g., the first peak voltage (V_{P1})) are insufficiently low and/or insufficiently high. In some such examples, in response to determining that one or more measured welding parameters are outside of a predetermined welding parameter range and/or are greater than and/or less than one or more welding parameter thresholds, the control circuitry 112 determines one or more second target welding parameters (e.g., the second peak voltage (V_{P2})) by modifying at least one of the one or more first target welding parameters (e.g., by increasing the first peak voltage (V_{P1})). For example, by, in FIG. 5, calculating the second peak voltage (V_{P2}) by increasing the first peak voltage (V_{P1}), the control circuitry 112 may modify an arc length of the welding circuit to bring the arc length to a target arc length (e.g., as indicated by the fourth short circuit duration (D₄) equaling the target short circuit duration (D_{T})) and resolving, reducing, and/or preventing a magnitude of ongoing and/or beginning repetitive welding parameter modification and/or a risk of potential future repetitive welding parameter modification.

In the example of FIG. 5, the control circuitry 112 controls the power conversion circuitry 110 to output welding power in a voltage-controlled mode during some or all of each of the background phases 501B, 502B, 503B, 504B and during some or all of each of the peak phases 501A, 502A, 503A, 504A. In some examples, the control circuitry 112 controls the power conversion circuitry 110 to output welding power in a voltage-controlled mode, a current-controlled mode, a power-controlled mode, an enthalpy-controlled mode, a resistance-controlled mode, and/or one or more other welding parameter-controlled modes. Accordingly, in some examples, in addition to and/or alternatively to determining, controlling, and/or modifying a target voltage (e.g., the peak voltages (V_{P1}, V_{P2})) of a voltage-controlled mode (e.g., the voltage-controlled mode of the peak phases 501A, 502A, 503A, 504A), the control circuitry 112 determines, controls, and/or modifies one or more other welding parameters of one or more other welding parameter-controlled modes. For example, the control circuitry 112 may determine, control, and/or modify one or more target voltages (e.g., one or more target peak voltages, one or more target background voltages, and/or one or more other target voltages) of one or more voltage-controlled modes, one or more target currents (e.g., one or more target peak currents, one or more target background currents, and/or one or more other target currents) of one or more current-controlled modes, one or more target powers (e.g., one or more target peak powers, one or more target background powers, and/or one or more other target powers) of one or more power-controlled modes, one or more target enthalpies (e.g., one or more target peak enthalpies, one or more target background enthalpies, and/or one or more other target enthalpies) of one or more enthalpy-controlled modes, and/or one or more target resistances (e.g., one or more target peak resistances, one or more target background resistances, and/or one or more other target resistances) of one or more resistance-controlled modes.

In the example of FIG. 5, the control circuitry 112 determines, controls, and/or modifies target welding parameters (e.g., the peak voltages (V_{P1}, V_{P2})) based on one or more measured currents (e.g., the peak currents (I_{P2}, I_{P3})). In some examples, the control circuitry 112 determines one or more target voltages, one or more target currents, one or more target powers, one or more target enthalpies, one or more target resistances, and/or one or more other target welding parameters based on one or more measured voltages, one or more measured currents, one or more measured powers, one or more measured enthalpies, one or more measured resistances, and/or one or more other measured welding parameters.

In some examples, the control circuitry 112 does not concurrently (e.g., during the same phase, during same pulse cycle, during the same of one or more other time intervals of a welding waveform and/or welding operation) modify a target welding parameter (e.g., determine the second peak voltage (V_{P2})) based on a predetermined welding parameter range and modify one or more other welding parameters (e.g., modify the third pulse width (PW₃)) based on one or more short circuit parameters (e.g., the third short circuit duration (D3) of the third short circuit event 550). In some examples, the control circuitry 112 modifies one or more welding parameters based on one or more short circuit parameters concurrently with modifying one or more target welding parameters. For example, in FIG. 5, the control circuitry 112 determines a fourth pulse width (PW₄) of the fourth peak phase 504A that differs from a third pulse width (PW₃), and the control circuitry 112 modifies both pulse width and target peak voltage (e.g., increasing the first peak voltage (V_{P1}) to the second peak voltage (V_{P2})) during the fourth pulse cycle 504.

In some examples, when modifying one or more welding parameters based on one or more short circuit parameters concurrently with modification of one or more target welding parameters, welding parameter modification based on one or more short circuit parameters may be conducted in one or more of the processes described with respect to FIGS. 2A-3D. In some examples, when modifying one or more welding parameters based on one or more short circuit parameters concurrently with modification of one or more target welding parameters, welding parameter modification based on one or more short circuit parameters may be adjusted (e.g., with respect to one or more of the processes described with respect to FIGS. 2A-3D) based on the modification of the one or more target welding parameters. For example, in FIG. 5, despite the third short circuit duration (D₃) being greater than the target short circuit duration (D_{T}), the control circuitry 112 calculates the fourth pulse width (PW₄) by decreasing (rather than increasing) the third pulse width (PW₃), e.g., because the peak voltage increases from the first peak voltage (V_{P1}) to the second peak voltage (V_{P2}) in the fourth peak phase 504A.

In some examples, the control circuitry 112 measures one measured welding parameter (e.g., one measured voltage value, one measured current value, one measured power value, one measured resistance value, and/or one measured enthalpy value) and/or any plurality of measured welding parameters (e.g., any plurality of measured voltage values, any plurality of measured current values, any plurality of measured powers, any plurality of measured resistances, and/or any plurality of measured enthalpies) during one or more phases of a pulse cycle (e.g., a background phase, a peak phase, etc.), one or more portions of a pulse cycle (e.g., a ramping up period, a ramping down period, etc.), one or more portions of a waveform, and/or one or more other frequencies, time intervals, and/or other portions of a welding operation for comparison against one or more predetermined welding parameter ranges (e.g., a predetermined voltage range, a predetermined current range, a predetermined power range, a predetermined enthalpy range, and/or a predetermined resistance range). In some examples, in addition to and/or alternatively to comparing the peak currents (I_{P1}, I_{P2}, I_{P3}, I_{P4}) to the predetermined peak current range 521, the control circuitry compares one or more measured welding parameters (e.g., measured voltages, measured currents, measured powers, measured resistances, and/or measured enthalpies) of one or more background phases to one or more predetermined background welding parameter ranges (e.g., predetermined background voltage ranges, predetermined background current ranges, predetermined background power ranges, predetermined background resistance ranges, and/or predetermined background enthalpy ranges), compares one or more measured welding parameters of one or more peak phases to one or more predetermined peak welding parameter ranges, compares one or more measured welding parameters of one or more other phases to one or more other predetermined welding parameter ranges, compares one or more measured welding parameters of one or more ramping up periods to one or more predetermined ramping up period welding parameter ranges, compares one or more measured welding parameters of one or more ramping down periods to one or more predetermined ramping down period welding parameter ranges, and/or one or more measured welding parameters of one or more other portions of a waveform and/or of a welding operation to one or more other predetermined welding parameter ranges.

In the example of FIG. 5, the control circuitry 112 determines a target peak voltage in response to determining that both a measured current of a first pulse cycle (e.g., the second pulse cycle 502) and a measured current of a second pulse cycle (e.g., the third pulse cycle 503) that is output directly after (e.g., without any intervening pulse cycles) the first pulse cycle are outside of a predetermined current range. In some examples, the control circuitry 112 determines one or more target welding parameters in response to any plurality of measured welding parameters of any plurality of successive pulse cycles that directly follow one another. In some examples, the control circuitry determines one or more target welding parameters in response to measuring any plurality of welding parameters as being outside of one or more predetermined welding parameter ranges even if two or more respective pulse cycles of the plurality of welding parameters are separated in time by one or more intermediary pulse cycles. For example, if a number of intermediary pulse cycles (e.g., a number of intermediary pulse cycles that is less than predetermined threshold number of intermediary pulse cycles) occurred between the pulse cycles 502, 503, the control circuitry 112 may nonetheless determine the second target voltage (V_{P2}) based on the measured peak currents (IP₂, I_{P3}), even if measured peak currents of each of the intermediary pulse cycles were not outside of the predetermined peak current range 521. As another example, the control circuitry 112 may determine a peak voltage in response to, e.g., any three measured peak currents of, e.g., 10 directly successive peak phases (e.g., measured currents of the first peak phase, the fourth peak phase, and the ninth peak phase of the 10 directly successive peak phases) being outside of a predetermined current range. In some examples, the control circuitry 112 determines, controls, and/or modifies one or more target welding parameters in response to determining that any plurality of measured welding parameters are outside of (e.g., greater than and/or less than) of any plurality of respective phases, pulse cycles, portions of welding waveforms, and/or other portions of a welding operation.

In some examples, the control circuitry 112 determines one or more target welding parameters based on one or more sampled welding parameters measured by sampling one or more measured welding parameters over a predetermined amount of time. For example, the control circuitry 112 can determine a sampled current of the first peak phase 501A by sampling (e.g., averaging and/or otherwise combining via input into one or more mathematical formulae) a plurality of measured currents at a plurality of times between the first time (T₁) and the second time (T₂).

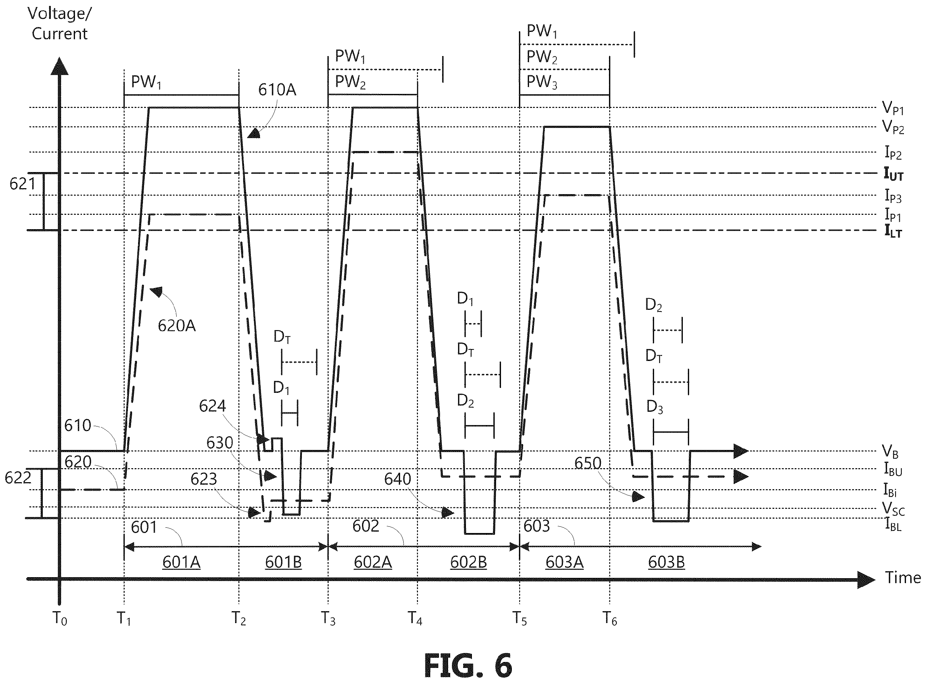

Referring now to FIG. 6, and with reference to FIG. 1, in some examples, the control circuitry 112 determines, controls, and/or modifies a target welding parameter based on only one measured welding parameter being outside of a predetermined welding parameter range. For example, FIG. 6 illustrates an example of the control circuitry 112 determining a target peak voltage based on a measured peak current of only one peak phase being outside of a predetermined peak current range.

FIG. 6 depicts a voltage waveform 610A (denoted, in FIG. 6, by a solid line) of a voltage 610 (e.g., a target voltage commanded by the control circuitry 112, a measured voltage measured by the voltage sensor 162, etc.) and a current waveform 620A (denoted, in FIG. 6, by a dashed line) of a current 620 (e.g., a target current commanded by the control circuitry 112, a measured current measured by the current sensor 164, etc.). In response to detecting a first short circuit 630 in a first background phase 601B of a first pulse cycle 601, the control circuitry 112 determines a first short circuit duration (D₁) that is less than a target short circuit duration (D_{T}). Accordingly, the control circuitry 112 calculates a second pulse width (PW₂) by decreasing a first pulse width (PW₁) of a first peak phase 601A of the first pulse cycle, and the control circuitry 112 controls the power conversion circuitry 110 to output welding power in a second peak phase 602A of a second pulse cycle 602 according to the second pulse width (PW₂).

However, in the example of FIG. 6, the control circuitry 112 controls the power conversion circuitry 110 to output welding power in each of the peak phases 601A, 602A in a voltage-controlled mode according to a first peak voltage (V_{P1}) that is too high (e.g., applies too much heat to the electrode 142 such that the electrode 142 melts too quickly to properly conduct a welding operation). Accordingly, the decrease in pulse width to the second pulse width (PW₂) does not sufficiently decrease an arc length of the weld circuit to a target arc length. However, the decrease in arc length caused by the decrease in pulse width does decrease a resistance in the weld circuit. Accordingly, to keep the voltage 610 at the first peak voltage (V_{P1}) during the second peak phase 602A, the control circuitry 112 controls the power conversion circuitry 110 to output welding power at a second peak current (I_{P2}) that is greater than a first peak current (I_{P1}) of the first peak phase 601A.

The control circuitry 112 monitors the current 620 during each of the peak phases 601A, 602A to determine one or more measured currents of each of the peak phases 601A, 602A. The control circuitry 112 compares the measured currents to a predetermined peak current range 621 (defined by an upper threshold peak current (I_{UT}) and a lower threshold peak current (I_{LT})) and determines that the second peak current (I_{P2}) is greater than the upper threshold peak current (I_{UT}) and, thereby, outside of the predetermined peak current range 621.

In response to determining that the second peak current (I_{P2}) of the second peak phase 602A is outside of the predetermined peak current range 621, the control circuitry 112 determines a second peak voltage (V_{P2}). For example, because the second peak current (I_{P2}) is greater than the upper threshold peak current (I_{UT}), the control circuitry 112 calculates the second peak voltage (V_{P2}) by decreasing the first peak voltage (V_{P1}). In a third peak phase 603A of a third pulse cycle 603, the control circuitry 112 controls the power conversion circuitry 110 to output welding power in a voltage-controlled mode according to the second peak voltage (V_{P2}). Because the second peak voltage (V_{P2}) is less than the first peak voltage (V_{P1}), a third peak current (I_{P3}) of the third peak phase 603A decreases relative to the second peak current (I_{P2}) and, in the example of FIG. 5, is within the predetermined peak current range 621. Furthermore, because the second peak voltage (V_{P2}) causes the welding power to apply less heat to the electrode 142 during the fourth peak phase 504A, the arc length of the weld circuit is decreased, such that, in a third background phase 603B of the third pulse cycle 603, a third short circuit duration (D₃) of a third short circuit 650 is equal to the target short circuit duration (D_{T}).

When using waveforms having higher taught background currents, welding operations having high weld circuit resistance can cause a significant drop in weld current at higher background voltages such that pulse width compensation is insufficient to provide the additional energy. In addition to a predetermined peak current range 621, the example control circuitry 112 may implement a predetermined background current range 622. The example background current range 622 includes an upper threshold background current I_{BU} and a lower threshold background current I_{BL}. Following the first peak phase 601A, a relatively high weld circuit resistance may cause the current 620 to drop below the lower threshold background current I_{BL}, as shown at current drop 623. The control circuitry 112 responds to the current drop 623 by increasing the target background voltage (e.g., relative to the background voltage V_{B}) as shown at voltage increase 624. Conversely, if the current 620 during the background phase 601B, 602B, 603B increases above the upper threshold background current I_{BU}, the control circuitry 112 responds to the increase in current by decreasing the target background voltage of the relative to the background voltage V_{B}. The control circuitry 112 may implement the increase or decrease in target voltage immediately during the same background phase 601B, 602B, 603B in which the current 620 is observed to go outside of the predetermined background current range 622 and/or may implement the increase or decrease in target voltage in a subsequent background phase 601B, 602B, 603B.

Referring to FIGS. 5 and 6, in some examples, a predetermined welding parameter range may include only one threshold value (e.g., only an upper threshold value or only a lower threshold value). Accordingly, in some such examples, a target parameter may be only increased or only decreased. For example, the predetermined peak current range 521 of FIG. 5 may, alternatively, include only the lower threshold peak current (I_{LT}) but not the upper threshold peak current (I_{UT}), and so, in some such examples, the control circuitry 112 may only increase, but not decrease, target peak voltages based on one or more measured currents being outside of the predetermined peak current range 521. Conversely, if the predetermined peak current range 621 of FIG. 6, alternatively, included only the lower threshold peak current (I_{LT}) but not the upper threshold peak current (I_{UT}), the increase in peak current from the first peak current (IP1) to the second peak current (I_{P2}) would not prompt modification of the first target peak voltage (V_{P1}).

While, in the examples of FIGS. 4-6, the control circuitry 112 modifies pulse width based on short circuit duration, in some examples, the control circuitry 112 additionally and/or alternatively modifies one or more other welding parameters and/or bases modification one or more other short circuit parameters. In some such examples, the control circuitry 112 modifies, based on one or more short circuit parameters, one or more durations of one or more phases of a waveform, modify one or more durations of one or more portions of a waveform, one or more waveform frequencies, one or more ramping up rates, one or more ramping down rates, one or more target pulse parameters, one or more pulse widths, one or more pulse frequencies, one or more target voltages, one or more target currents, one or more target powers, one or more target enthalpies, one or more target resistances, one or more other target welding parameters, and/or one or more other welding parameters.

The waveforms 410A, 420A, 510A, 520A, 610A, 620A are depicted in FIGS. 4-6 as including substantially constant values and substantially constant rates of change during some time intervals, but such depictions are for illustrative purposes only. In some examples, a voltage and/or current (e.g., measured by the sensors 162, 164) may vary during one or more time intervals in one or more ways not depicted in and/or indicated by any, some, or all of FIGS. 4-6. For example, relative proportions of voltage levels (e.g., target peak voltages, target background voltages, voltage levels of short circuits, voltage levels of anomalous cathode events, etc.), voltage rates of change (e.g. one or more voltage ramping up rates, one or more voltage ramping down rates, one or more rates of change to or from voltage levels of a short circuit, etc.), current levels (e.g., target peak currents, target background currents, current levels of short circuits, current levels of anomalous cathode events, etc.), current rates of change (e.g. one or more ramping up rates, one or more ramping down rates, one or more rates of change to or from currents levels of a short circuit, etc.), or durations (e.g., durations of one or more peak phases, one or more background phases, one or more short circuits, one or more ramping up periods, one or more ramping down periods, etc.) depicted in FIGS. 4-6 are purely illustrative and may, in various embodiments, vary from the relative proportions depicted in any, some, or all of FIGS. 4-6.

In some examples, rather than determine whether one or more measured currents are outside of a predetermined current range, the control circuitry 112 compares one or more other welding parameters (e.g., target pulse parameters, measured pulse parameters, target welding parameters, welding parameters, etc.) to one or more other welding parameter ranges. In some examples, the control circuitry 112 compares one or more determined pulse widths (e.g., a peak pulse width modified according to and/or determined by a control loop of an arc length-controlled mode) to a predetermined pulse width range while controlling the power conversion circuitry 110 according to a first target voltage (e.g., a target peak voltage) and, in response to determining that the one or more determined pulse widths are outside of a predetermined pulse width range, the control circuitry 112 determines a second target voltage. In some such examples, the control loop of the arc length-controlled mode (e.g., that modifies one or more welding parameters based on one or more short circuit parameters) controls the power conversion circuitry to output one or more pulse cycles according to the second target voltage and the determined pulse width, despite the pulse width being outside of the predetermined pulse width range, and may, further, modify the predetermined pulse width range to include the determined pulse width. In some examples, the control loop of the arc length-controlled mode (e.g., that modifies one or more welding parameters based on one or more short circuit parameters) controls the power conversion circuitry to output one or more pulse cycles according to the second target voltage and a modified determined pulse width that is within the predetermined pulse width range. In some examples, in response to determining that the pulse width is greater than the predetermined pulse width range, the control circuitry 112 calculates the second target voltage by increasing the first target voltage, and, in response to determining that the pulse width is less than the predetermined pulse width range, the control circuitry 112 calculates the second target voltage by decreasing the first target voltage. In some examples,

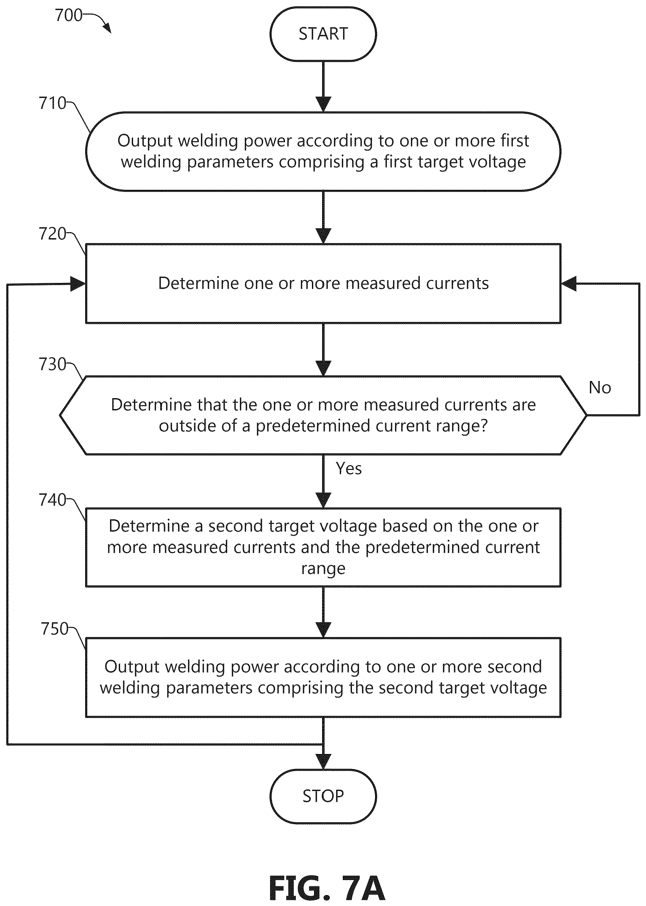

FIG. 7A is a flowchart illustrating an example of a process 700 of operating a welding system (e.g., the system 100). The process 700 may be implemented by control circuitry (e.g., the control circuitry 112) by executing machine-readable instructions, e.g., stored on a non-transitory machine-readable storage device (e.g., the storage device 123 and/or the memory device 124). In describing the process 700, reference will be made to the examples of FIGS. 1, 2A, 2B, 5, and 6. However, the process 700 may be used with other examples, such as alternative examples described elsewhere herein. In some examples, any, some, or all of the blocks of the process 700 may be performed in alternative orders than those depicted in FIG. 7A, repeated any plurality of instances, and/or omitted.

At a block 710 of the process 700, the control circuitry 112 controls the power conversion circuitry 110 to output welding power according to one or more first welding parameters at least by outputting the welding power according to one or more first target welding parameters a welding parameter-controlled mode during at least a portion of one or more phases and/or waveforms of the one or more first welding parameters. In some examples, the control circuitry 112 controls the power conversion circuitry 110 to output welding power according to one or more first welding pulse cycles (e.g., any, some, or all of the pulse cycles 201, 202, 251, 252, 501, 502, 503, 504, 601, 602, 603) at least by outputting the welding power according to one or more first target peak voltages (e.g., the peak voltage (V_{P}) of FIG. 2A, the peak voltage (V_{P}) of FIG. 2B, the peak voltage (V_{P}) of FIG. 4, either or both of the peak voltages (V_{P1}, V_{P2}) of FIG. 5, and/or either or both of the peak voltages (V_{P1}, V_{P2}) of FIG. 6) in a voltage controlled mode during at least a portion of a peak phase (e.g., any, some, or all of the peak phases 401A, 402A, 403A, 501A, 502A, 503A, 504A, 601A, 602A, 603A) of the one or more first pulse cycles.

In some examples, the control circuitry 112 controls the power conversion circuitry 110 to output welding power in any, some, or all of one or more voltage-controlled modes according to one or more target voltages, one or more current-controlled modes according to one or more target currents, one or more power-controlled modes according to one or more target powers, one or more resistance-controlled modes according to one or more target resistances, and/or one or more enthalpy-controlled modes according to one or more target enthalpies. In some examples, the one or more welding parameters comprise a target voltage (e.g., the target peak voltages (V_{P1}, V_{P2}) of either or both of FIGS. 5 and 6). In some examples, the one or more first welding parameters comprise one or more wire feed speeds, one or more durations of one or more phases of a waveform, one or more durations of one or more portions of a waveform, one or more waveform frequencies, one or more ramping up rates, one or more ramping down rates, one or more target pulse parameters, one or more target voltages, one or more target currents, one or more target powers, one or more target enthalpies, one or more target resistances, one or more other target welding parameters, one or more pulse parameter setpoints, one or more voltage setpoints, one or more current setpoints, one or more power setpoints, one or more enthalpy setpoints, one or more resistance setpoints, and/or one or more other welding parameter setpoints. In some examples, the control circuitry 112 controls the power conversion circuitry 110 to output one or more first pulse cycles (e.g., any, some, or all of the pulse cycles 201, 202, 251, 252, 501, 502, 503, 504, 601, 602, 603) according to one or more pulse widths, one or more pulse frequencies, one or more ramping up rates, one or more ramping down rates, one or more target peak voltages, one or more target background voltages, one or more other target voltages, one or more target peak currents, one or more target background currents, one or more other target currents, one or more target powers, one or more target enthalpies, one or more target resistances, and/or one or more other target values.

At a block 720 of the process 500, the control circuitry 112 determines one or more measured welding parameters (e.g., one or more measured currents) while outputting welding power (e.g., according to the one or more first welding parameters of the block 710). The control circuitry 112 may measure the one or more measured welding parameters by monitoring one or more welding parameters (e.g., a current of welding power) based on a sensor signal (e.g., generated by either or both of the sensors 162, 164) while outputting welding power.

In some examples, the control circuitry 112 determines one or more measured currents (e.g., any, some, or all of the peak currents (I_{P1}, I_{P2}, I_{P3}) of FIG. 4, any, some, or all of the peak currents (I_{P1}, I_{P2}, I_{P3}, I_{P4}) of FIG. 5, and/or any, some, or all of the peak currents (I_{P1}, I_{P2}, I_{P3}) of FIG. 6) by monitoring a current sensor signal generated by the current sensor 164 measuring a current of welding power (e.g., any, some, or all of the currents 420, 520, 620). In some examples, the control circuitry 112 determines one or more measured peak currents (e.g., any, some, or all of the peak currents (I_{P1}, I_{P2}, I_{P3}) of FIG. 4, any, some, or all of the peak currents (I_{P1}, I_{P2}, I_{P3}, I_{P4}) of FIG. 5, and/or any, some, or all of the peak currents (I_{P1}, I_{P2}, I_{P3}) of FIG. 6) during one or more peak phases t of one or more pulse cycles (e.g., any, some, or all of the pulse cycles 201, 202, 251, 252, 501, 502, 503, 504, 601, 602, 603).

In some examples, the control circuitry 112 determines one or more measured welding parameters of the system 100, such as any, some, or all of one or more measured voltages, one or more measured currents, one or more measured powers, one or more measured resistances, one or more measured enthalpies, and/or one or more other measured welding parameters. In some examples, the control circuitry 112 monitors the one or more measured welding parameters during one or more peak phases of one or more waveforms and/or pulse cycles (e.g., any, some, or all of the peak phases 210, 220, 260, 270, 401A, 402A, 403A, 501A, 502A, 503A, 504A, 601A, 602A, 603A), one or more background phases of one or more waveforms and/or pulse cycles (e.g., any, some, or all of the background phases 205, 215, 225, 250, 265, 275, 401B, 402B, 403B, 501B, 502B, 503B, 504B, 601B, 602B, 603B), one or more ramping up periods of one or more waveforms and/or pulse cycles (e.g., the ramping up period 211 and/or one or more ramping up periods of any, some, or all of the peak phases 210, 220, 260, 270, 401A, 402A, 403A, 501A, 502A, 503A, 504A), one or more ramping down periods of one or more waveforms and/or pulse cycles (e.g., the ramping down period 217 and/or one or more ramping down periods of any, some, or all of the background phases 205, 215, 225, 250, 265, 275, 401B, 402B, 403B, 501B, 502B, 503B, 504B), one or more sampling periods of at least a portion of one or more waveforms and/or pulse cycles (e.g., by determining a sampled current based on a plurality of measured currents measured during a sampling period), and/or one or more other portions of one or more waveforms and/or pulse cycles.

At a block 730 of the process 700, the control circuitry 112 determines whether the one or more measured welding parameters (e.g., one or more measured currents, one or more measured voltages, one or more measured powers, one or more measured enthalpies, and/or one or more measured resistances) are outside of a predetermined welding parameter range (e.g., a predetermined current range, a predetermined voltage range, a predetermined power range, a predetermined enthalpy range, and/or a predetermined resistance range), less than a lower threshold welding parameter (e.g., a lower threshold current, a lower threshold voltage, a lower threshold power, a lower threshold enthalpy, and/or a lower threshold resistance), and/or greater than an upper threshold welding parameter (e.g., an upper threshold current, an upper threshold voltage, an upper threshold power, an upper threshold enthalpy, and/or an upper threshold resistance). In some examples, the control circuitry 112 determines whether one or more measured currents (e.g., any, some, or all of the peak currents (I_{P1}, I_{P2}, I_{P3}) of FIG. 4, any, some, or all of the peak currents (I_{P1}, I_{P2}, I_{P3}, I_{P4}) of FIG. 5, and/or any, some, or all of the peak currents (I_{P1}, I_{P2}, I_{P3}) of FIG. 6) are outside of a predetermined current range (e.g., either or both of the predetermined peak current ranges 521, 621), less than a lower threshold current (e.g., the lower threshold peak current (I_{LT}) of FIG. 5 and/or the lower threshold peak current (I_{LT}) of FIG. 6), and/or greater than an upper threshold current (e.g., the upper threshold peak current (I_{UT}) of FIG. 5 and/or the upper threshold peak current (I_{UT}) of FIG. 6).

In some examples, in response to determining that any, some, or all of the measured welding parameters (e.g., only one measured current and/or any plurality of measured currents of one or more phases and/or portions of one or more pulse cycles and/or waveforms) are within a predetermined welding parameter range, greater than a lower threshold welding parameter, and/or less than an upper threshold welding parameter, the control circuitry 112 returns to, e.g., the block 710 and/or the block 720 of the process 700.

At a block 740 of the process 700, in response to determining that any, some, or all of the measured welding parameters (e.g., only one measured current and/or any plurality of measured currents of one or more phases and/or portions of one or more pulse cycles and/or waveforms) are outside of a predetermined welding parameter range, less than a lower threshold welding parameter, and/or greater than an upper threshold welding parameter, the control circuitry 112 determines one or more second target welding parameters (e.g., one or more target voltages, one or more target currents, one or more target powers, one or more target resistances, and/or one or more target enthalpy) based on the one or more measured welding parameters and the predetermined welding parameter range and/or one or more threshold welding parameters.

In some examples, the control circuitry 112 determines one or more second target peak voltages (e.g., the second peak voltage (V_{P2}) of FIG. 5 and/or the second peak voltage (V_{P2}) of FIG. 6) based on one or more measured currents (e.g., any, some, or all of the peak currents (I_{P1}, I_{P2}, I_{P3}, I_{P4}) of FIG. 5 and/or any, some, or all of the peak currents (I_{P1}, I_{P2}, I_{P3}) of FIG. 6) and one or more predetermined peak current ranges (e.g., either or both of the predetermined peak current ranges 521, 621). In some examples, in response to determining that at least one of one or more measured currents (e.g., the second peak current (I_{P2}) of FIG. 6) are greater than a predetermined current range (e.g., either or both of the predetermined peak current ranges 521, 621) and/or an upper threshold peak current (e.g., the upper threshold peak current (I_{UT}) of FIG. 5 and/or the upper threshold peak current (I_{UT}) of FIG. 6), the control circuitry 112 calculates a second target peak voltage (e.g., the second peak voltage (V_{P2}) of FIG. 6) by decreasing at least one of one or more first target peak voltages (e.g., the first peak voltage (V_{P1}) of FIG. 6). In some examples, in response to determining that at least one of one or more measured currents (e.g., the second peak current (I_{P2}) and/or the third peak current (I_{P3}) of FIG. 5) are less than a predetermined current range (e.g., either or both of the predetermined peak current ranges 521, 621) and/or a lower threshold peak current (e.g., the lower threshold peak current (I_{LT}) of FIG. 5 and/or the lower threshold peak current (I_{LT}) of FIG. 6), the control circuitry 112 calculates a second target peak voltage (e.g., the second peak voltage (V_{P2}) of FIG. 5) by increasing at least one of one or more first target peak voltages (e.g., the first peak voltage (V_{P1}) of FIG. 5).

In some examples, in response to determining that one or more measured welding parameters are less than a predetermined welding parameter range and/or a lower threshold welding parameter, the control circuitry 112 may determine a second target welding parameter (e.g., a second target voltage) by modifying a first target welding parameter (e.g., increasing a first target voltage) by a predetermined amount (e.g., 1 volt) and/or a variable amount (e.g., an amount calculated based on one or more differences between the one or more measured welding parameters and the predetermined welding parameter range and/or the lower threshold welding parameter). In some examples, in response to determining that one or more measured welding parameters are greater than a predetermined welding parameter range and/or an upper threshold welding parameter, the control circuitry 112 may determine a second target welding parameter (e.g., a second target voltage) by modifying a first target welding parameter (e.g., decreasing a first target voltage) by a predetermined amount (e.g., 1 volt) and/or a variable amount (e.g., an amount calculated based on one or more differences between the one or more measured welding parameters and the predetermined welding parameter range and/or the upper threshold welding parameter).

At a block 750 of the process 700, the control circuitry 112 controls the power conversion circuitry 110 to output welding power (e.g., as one or more pulse cycles) according to one or more second welding parameters (e.g., one or more target welding parameters, one or more target pulse parameters, one or more durations of one or more phases of a waveform, one or more durations of one or more portions of a waveform, one or more waveform frequencies, one or more ramping up rates, one or more ramping down rates, etc.) at least by outputting the welding parameter in a welding parameter-controlled mode (e.g., a voltage-controlled mode, a current-controlled mode, a power-controlled mode, a resistance-controlled mode, and/or an enthalpy-controlled mode) comprising the one or more second target welding parameters of the block 740 (e.g., one or more target voltages, one or more target currents, one or more target powers, one or more target resistances, and/or one or more target enthalpies). In some examples, the control circuitry 112 controls the power conversion circuitry 110 to output welding power according to one or more second pulse cycles (e.g., either or both of the pulse cycles 504, 603) at least by outputting the welding power in a voltage-controlled mode according to a second target peak voltage (e.g., the second peak voltage (V_{P2}) of FIG. 5 and/or the second peak voltage (V_{P2}) of FIG. 6) during at least a portion of a peak phase (e.g., either or both of the peak phases 504A, 603A) of the one or more second pulse cycles.

In some examples, after the block 750, the control circuitry 112 returns to the block 720 (e.g., immediately, during a subsequent pulse cycle, after one pulse cycle, after a predetermined number of pulse cycles, and/or after a predetermined amount of time) to continue the process 700 during a welding operation. In some examples, any, some, or all of the blocks 710, 720, 730, 740, 750 may be reiterated, with welding parameters being modified in each iteration of the block 730 and/or remaining unchanged in each iteration of the block 720. In some examples, after the block 750, the process 700 may end, e.g., due to a welding operation ending.

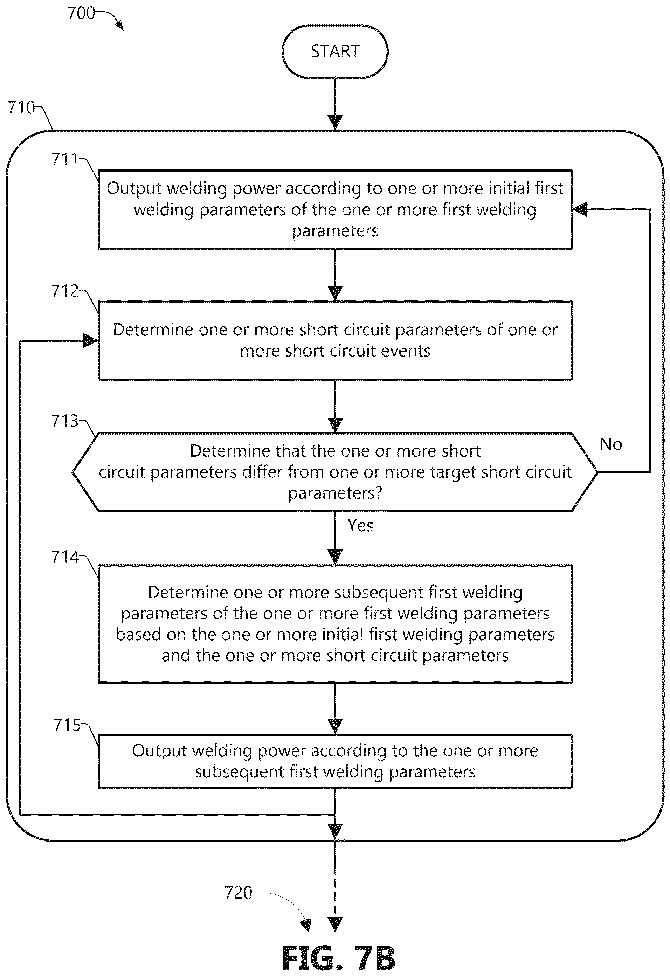

Referring now to FIG. 7B, and with reference to FIG. 7A, in some examples, the block 710 the one or more first welding parameters comprise one or more pluralities of welding parameters. For example, the one or more first welding parameters may comprise one or more initial first welding parameters associated with a first period of the first welding parameters (e.g., one or more initial first pulse cycles) and one or more subsequent first welding parameters associated with a second period of the first welding parameters (e.g., one or more subsequent first pulse cycles). In some examples, the one or more first welding parameters comprise one or more initial first pulse cycles, one or more subsequent first pulse cycles, and/or one or more intermediary first pulse cycles (e.g., one or more of the one or more intermediary first pulse cycles comprising the same welding parameters and/or any plurality of distinct groups of welding parameters).

For example, in a block 711 of some examples of the block 710, the control circuitry 112 controls the power conversion circuitry 110 to output welding power according to one or more initial first welding parameters of the one or more first welding parameters. In some examples, the one or more initial first welding parameters comprise one or more initial pulse cycles (e.g., any, some, or all of the pulse cycles 201, 202, 251, 252, 401, 402, 403, 501, 502, 503, 504, 601, 602, 603). In some examples, the one or more initial first welding parameters comprise one or more initial pulse widths (e.g., either or both of the first pulse widths (PW_{1A}, PW_{1B}), either or both of the pulse widths (PW₁, PW₂) of FIG. 4, any, some, or all of the pulse widths (PW₁, PW₂, PW₃) of FIG. 5, and/or either or both of the pulse widths (PW₁, PW₂) of FIG. 6). In some examples, the one or more initial first welding parameters comprise one or more wire feed speeds, one or more durations of one or more phases of a waveform, one or more durations of one or more portions of a waveform, one or more waveform frequencies, one or more ramping up rates, one or more ramping down rates, one or more target pulse parameters, one or more target voltages, one or more target currents, one or more target powers, one or more target enthalpies, one or more target resistances, one or more other target welding parameters, one or more pulse parameter setpoints, one or more voltage setpoints, one or more current setpoints, one or more power setpoints, one or more enthalpy setpoints, one or more resistance setpoints, and/or one or more other welding parameter setpoints.

In a block 712 of some examples of the block 710, the control circuitry 112 determines one or more short circuit parameters (e.g., a short circuit duration) of one or more short circuit events (e.g., any, some, or all of the short circuit events 216, 226, 266, 276, 430, 440, 450, 530, 540, 550, 560, 630, 640, 650). In some examples, the control circuitry 112 determines the one or more short circuit parameters by monitoring a voltage sensor signal (e.g., during one or more background phases of one or more pulse cycles) generated by the voltage sensor 162. For example, the control circuitry 112 may compare one or more measured voltages to one or more short circuit detection voltage thresholds (e.g., the short circuit detection voltage threshold (Vsc) of FIG. 2A and/or short circuit detection voltage threshold (V_{SC}) of FIG. 2B). In some such examples, the control circuitry 112 measures the one or more measured voltages during one or more background phases (e.g., any, some, or all of the background phases 205, 215, 225, 250, 265, 275, 401B, 402B, 403B, 501B, 502B, 503B, 504B, 601B, 602B, 603B) and/or one or more other portions of one or more pulse cycles (e.g., any, some, or all of the pulse cycles 201, 202, 251, 252, 401, 402, 403, 501, 502, 503, 504, 601, 602, 603) and/or one or more waveforms. In some examples, the one or more short circuit parameters comprise one or more short circuit durations (e.g., any, some, or all of the short circuit durations (D₁, D₂, D₃, D₄) of FIGS. 2A and 2B, any, some, or all of the short circuit durations (D₁, D₂, D₃) of FIG. 4, any, some, or all of the short circuit durations (D₁, D₂, D₃, D₄) of FIG. 5, and/or any, some, or all of the short circuit durations (D₁, D₂, D₃) of FIG. 6).

In a block 713 of some examples of the block 710, the control circuitry 112 determines whether any, some, or all of the one or more short circuit parameters differ from one or more target short circuit parameters (e.g., the first target short circuit duration (D_{TA}), the second target short circuit duration (D_{TB}), the target short circuit duration (D_{T}) of FIG. 4, the target short circuit duration (D_{T}) of FIG. 5, and/or the target short circuit duration (D_{T}) of FIG. 6). In some examples, the one or more target short circuit parameters include one or more single values (e.g., a single short circuit duration value) and/or one or more ranges of values (e.g., a range of short circuit duration values). In some examples, in response to determining that any, some, or all of the short circuit parameters are equal to a value of one or more target short circuit parameters and/or within a range of one or more target short circuit parameters, the control circuitry 112, e.g., returns to the block 711 of the block 710 and/or proceeds to the block 720 of the process 700.

In response to determining that any, some, or all of the short circuit parameters differ from one or more target short circuit parameters and/or are outside of a range of one or more target short circuit parameters, in a block 714 of some examples of the block 710, the control circuitry 112 determines one or more subsequent first welding parameters of the one or more first welding parameters based on the one or more initial first welding parameters and the one or more short circuit parameters. In some examples, the control circuitry 112 determines one or more subsequent pulse widths (e.g., either or both of the second pulse widths (PW_{2A}, PW_{2B}), either or both of the pulse widths (PW₂, PW₃) of FIG. 4, any, some, or all of the pulse widths (PW₂, PW₃, PW₄) of FIG. 5, and/or either or both of the pulse widths (PW₂, PW₃) of FIG. 6) based on one or more initial pulse widths and one or more short circuit durations (e.g., any, some, or all of the short circuit durations (D₁, D₂, D₃, D₄) of FIGS. 2A and 2B, any, some, or all of the short circuit durations (D₁, D₂, D₃) of FIG. 4, any, some, or all of the short circuit durations (D₁, D₂, D₃, D₄) of FIG. 5, and/or any, some, or all of the short circuit durations (D₁, D₂, D₃) of FIG. 6). In some examples, the one or more subsequent first welding parameters comprise one or more wire feed speeds, one or more durations of one or more phases of a waveform, one or more durations of one or more portions of a waveform, one or more waveform frequencies, one or more ramping up rates, one or more ramping down rates, one or more target pulse parameters, one or more target voltages, one or more target currents, one or more target powers, one or more target enthalpies, one or more target resistances, one or more other target welding parameters, one or more pulse parameter setpoints, one or more voltage setpoints, one or more current setpoints, one or more power setpoints, one or more enthalpy setpoints, one or more resistance setpoints, and/or one or more other welding parameter setpoints.

In some examples, in response to determining that one or more short durations (e.g., the short circuit duration (D₁) of FIG. 2A, and/or either or both of the short circuit durations (D₁, D₂) of FIG. 6) are less than a target short circuit duration, the control circuitry 112 calculate a subsequent pulse width (e.g., the second pulse width (PW_{2A}) and/or either or both of the pulse widths (PW₂, PW₃) of FIG. 6) by decreasing an initial pulse width (e.g., the first pulse width (PW_{1A}) and/or either or both of the pulse widths (PW₁, PW₂) of FIG. 6). In some examples, in response to determining that one or more short durations (e.g., the short circuit duration (D₁) of FIG. 2A, and/or either or both of the short circuit durations (D₁, D₂) of FIG. 6) are less than a target short circuit duration, the control circuitry 112 determines one or more second subsequent first welding parameters by decreasing an initial target peak voltage, decreasing one or more other initial target voltages, decreasing an initial target peak current, decreasing one or more other initial target currents, decreasing an initial waveform frequency, decreasing an initial pulse frequency, modifying one or more initial durations of one or more initial phases of a waveform, modifying one or more initial durations of one or more initial portions of a waveform, decreasing an initial pulse width, decreasing an initial ramping up rate (e.g., of an initial peak phase), increasing an initial ramping down rate (e.g., of an initial background phase), modifying one or more initial target powers of one or more initial pulse cycles and/or initial waveforms, modifying one or more initial target resistances of one or more initial pulse cycles and/or initial waveforms, and/or modifying one or more initial target entthalpies of one or more initial pulse cycles and/or initial waveforms.

In some examples, in response to determining that one or more short durations (e.g., the short circuit duration (D₃) of FIG. 2B, any, some, or all of the short circuit durations (D₁, D₂, D₃) of FIG. 4, and/or any, some, or all of the short circuit durations (D₁, D₂, D₃) of FIG. 5) are greater than a target short circuit duration, the control circuitry 112 calculates a subsequent pulse width (e.g., the second pulse width (PW_{2B}), either or both of the pulse widths (PW₂, PW₃) of FIG. 4, and/or any, some, or all of the pulse widths (PW₂, PW₃, PW₄) of FIG. 5) by increasing an initial pulse width (e.g., the first pulse width (PW_{1A}), either or both of the pulse widths (PW₁, PW₂) of FIG. 4, and/or any, some, or all of the pulse widths (PW₁, PW₂, PW₃) of FIG. 5). In some examples, in response to determining that one or more short durations (e.g., the short circuit duration (D₃) of FIG. 2B, any, some, or all of the short circuit durations (D₁, D₂, D₃) of FIG. 4, and/or any, some, or all of the short circuit durations (D₁, D₂, D₃) of FIG. 5) are greater than a target short circuit duration, the control circuitry 112 determines one or more second subsequent first welding parameters by increasing an initial target peak voltage, increasing one or more other initial target voltages, increasing an initial target peak current, increasing one or more other initial target currents, increasing an initial waveform frequency, increasing an initial pulse frequency, modifying one or more initial durations of one or more initial phases of a waveform, modifying one or more initial durations of one or more initial portions of a waveform, increasing an initial pulse width, increasing an initial ramping up rate (e.g., of an initial peak phase), decreasing an initial ramping down rate (e.g., of an initial background phase), modifying one or more initial target powers of one or more initial pulse cycles and/or initial waveforms, modifying one or more initial target resistances of one or more initial pulse cycles and/or initial waveforms, and/or modifying one or more initial target enthalpies of one or more initial pulse cycles and/or initial waveforms.

In a block 715 of some examples of the block 710, the control circuitry 112 controls the power conversion circuitry 110 to output welding power (e.g., as one or more pulse cycles) according to one or more subsequent first welding parameters (e.g., one or more target welding parameters, one or more target pulse parameters, one or more durations of one or more phases of a waveform, one or more durations of one or more portions of a waveform, one or more waveform frequencies, one or more ramping up rates, one or more ramping down rates, etc.) comprising the one or more subsequent first welding parameters of the block 714. In some examples, the control circuitry 112 controls the power conversion circuitry 110 to output welding power according to one or more subsequent first pulse cycles (e.g., any, some, or all of the pulse cycles 202, 252, 402, 403, 502, 503, 504, 602, 603).

In some examples, after the block 715, the control circuitry 112 returns to the block 712 (e.g., immediately, during a subsequent pulse cycle, after one pulse cycle, after a predetermined number of pulse cycles, and/or after a predetermined amount of time). In some examples, the block 710 does not include any, some, or all of the blocks 711, 712, 713, 714, 715. In some examples, any, some, or all of the blocks 711, 712, 713, 714, 715 may be reiterated (e.g., during one or more intermediary first pulse cycles and/or waveforms and/or one or more subsequent first pulse cycles and/or waveforms), with welding parameters (e.g., one or more intermediary first welding parameters and/or one or more subsequent first welding parameters) being modified in each iteration of the block 714 and/or remaining unchanged following the block 713. In some examples, after the block 715, the process 700 may end, e.g., due to a welding operation ending. In some examples, after the block 715, the control circuitry 112 may proceed to the block 720 and/or the block 730 following the block 715. In some examples, any, some, or all of the blocks 720, 730, 740, 750 occur simultaneously with any, some, or all of the blocks 711, 712, 713, 714, 715.

As used herein, the term "welding operation" refers to a process of welding one or more materials, components, etc. using one or more welding modes.

As used herein, the terms "welding system" and "welding-type system" refer to systems capable of generating and/or conditioning welding power and/or of conducting a welding operation (e.g., by generating, conditioning, and/or receiving welding power). A welding system or welding-type system may operate and/or be capable of operating in only one welding mode and/or in any plurality of welding modes.

As used herein, the terms "torch," "welding torch," "welding tool," and "welding-type tool" can include a hand-held or robotic welding torch, gun, or other device used to create the welding arc.

As used herein, the term "electrode" includes any consumable or non-consumable material which may be controllably provided to a welding torch by welding equipment and which may conduct a weld current (e.g., welding wire).

The term "arc length," as used herein, refers to the distance over which a welding-type arc extends between an end or tip of an electrode (e.g., welding wire) of a welding torch and a work piece (e.g., a piece, component, etc. being welded).

The term "electrode extension," as used herein, refers to a portion of an electrode (e.g., welding wire) extending beyond (e.g., outside of) a contact tip of a welding torch or other welding device.

As used herein, the terms "welding power" and "welding-type power" refer to power suitable for welding, plasma cutting, plasma welding, induction heating, air carbon arc cutting ("CAC-A") and/or hot wire welding/preheating (including laser welding and laser cladding). As used herein, the term "welding-type power supply" refers to any device capable of, when power is applied thereto, supplying welding, plasma cutting, plasma welding, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "welding mode" refers to the type and/or modality of process and/or output used by a welding system, such as gas-metal arc welding ("GMAW") (also referred to as metal inert gas welding ("MIG")), pulsed gas-metal arc welding ("GMAW-P") (also referred to as "pulsed MIG"), current-controlled welding, voltage-controlled welding, enthalpy-controlled welding, power-controlled welding, resistance-controlled welding, pulse welding, tungsten inert gas ("TIG") (also referred to as gas tungsten arc welding ("GTAW")), flux cored arc welding ("FCAW"), shielded metal arc welding ("SMAW") (also referred to as "stick welding"), plasma cutting, plasma welding, spray welding, short circuit transfer welding, pulsed spray welding, and/or one or more other welding modes. As used herein, the term "transfer mode" refers to the mechanism by which an electrode is transferred to a workpiece (e.g., a weld pool on the work piece), and a welding mode may include one or more transfer modes. A transfer mode may include, e.g., short circuit welding, pulse welding, spray welding, pulsed spray welding, Regulated Metal Deposition (i.e., RMD ^{®}), and/or one or more other transfer modes.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general-purpose microprocessor or microcontroller, a digital signal processing ("DSP") processor, an application-specific integrated circuit ("ASIC"), a graphic processing unit ("GPU"), a reduced instruction set computer ("RISC") processor with an advanced RISC machine ("ARM") core, etc. The processor may be coupled to, and/or integrated with a memory storage device.

As utilized herein the terms "circuits," "circuitry," "controller," and "control circuitry" refer to physical electronic components (i.e., hardware) and any software and/or firmware ("code") which may configure the hardware, be executed by the hardware, and/or otherwise be associated with the hardware. As used herein, for example, a "circuit" may comprise any analog and/or digital components, power and/or control elements (such as a microprocessor, digital signal processor ("DSP"), software, and the like), discrete and/or integrated components, associated software, hardware, and/or firmware, and/or portions and/or combinations thereof. As used herein, for example, a particular processor and memory storage device may comprise a first "circuit" when executing a first set of one or more lines of code and may comprise a second "circuit" when executing a second set of one or more lines of code. As utilized herein, circuitry is "operable" to, "configurable to," and/or "configured to" perform a function whenever the circuitry comprises the necessary hardware and code (if any is necessary) to perform the function, regardless of whether performance of the function is disabled or not enabled (for example, by an operator-configurable setting, factory trim, etc.).

As used herein, the term "communication circuitry" refers to physical electronic components (i.e., hardware) and, in some examples, any software and/or firmware (i.e., code) which may configure the hardware, be executed by the hardware, and/or otherwise enable the hardware to communicate with one or more other devices (e.g., with communication circuitry of such one or more other devices). Communication circuitry may include hardware capable of wired and/or wireless communication with one or more other devices. Hardware capable of wired communication may include, e.g., one or more cables or other optical communication mechanisms, one or more computer buses, and/or one or more additional wired mechanisms for communicating with one or more communications networks and/or one or more devices. Hardware capable of wireless communications may include, e.g., one or more transceivers, one or more antennas, one or more modems, one or more local area network ("LAN") ports, one or more wireless fidelity ("Wi-Fi") cards, one or more WiMax cards, mobile communications hardware, near-field communication hardware, satellite communication hardware, hardware configured to communicate in accordance with one or more wireless communication protocols (e.g., IrDA, Bluetooth, Wireless USB, Z-Wave, ZigBee, radio frequency identification ("RFID"), one or more other near field communications ("NFC") protocols, and/or one or more other protocols for close-proximity and/or wireless communication), and/or other hardware for wirelessly communicating with one or more communications networks and/or one or more devices. Communication circuitry may include one or more network interfaces, one or more input-output ("I/O") interfaces, and/or one or more other interfaces for communicating data (e.g., directly, via one or more communications paths, etc.) to and/or from one or more communications networks. An example network interface may include hardware, firmware, and/or software to communicatively couple communication circuitry to one or more communications networks. A network interface may include and/or be coupled to one or more communication paths. A communication path includes hardware which provides signal interconnectivity between one or more components (e.g., control circuitry and a transceiver). A network interface may include any hardware for transmitting and/or receiving communications (e.g., IEEE 802.X-compliant wireless and/or wired communications hardware). An example I/O interface includes hardware, firmware, and/or software to connect one or more I/O devices to control circuitry (communicatively coupled to, e.g., communication circuitry comprising the I/O interface) for providing input to the control circuitry and/or providing output from the control circuitry. For example, the I/O interface may include a graphics processing unit for interfacing with a display device, a universal serial bus port for interfacing with one or more USB-compliant devices, a FireWire, a field bus, and/or any other type of interface. Example I/O device(s) may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device. Control circuitry communicatively coupled to an I/O interface may access a non-transitory machine-readable medium via the I/O interface and/or one or more I/O device(s). Examples of a machine-readable medium include optical discs (e.g., compact discs ("CDs"), digital versatile/video discs ("DVDs"), Blu-ray discs, etc.), magnetic media (e.g., floppy disks), portable storage media (e.g., portable flash drives, secure digital ("SD") cards, etc.), and/or any other type of removable and/or installed machine-readable media.

A "communications network" may include one or more of the Internet, one or more personal area networks ("PAN(s)"), one or more LANs, one or more wide area networks ("WAN(s)"), one or more cellular networks, one or more satellite networks, one or more global positioning systems, one or more other such networks, and/or any combination thereof. A LAN may include, e.g., one or more wired technologies (e.g., Ethernet, USB, etc.) and/or one or more wireless technologies (e.g., Wi-Fi). A PAN may include one or more wired technologies (e.g., USB, FireWire, and/or one or more other computer buses) and/or one or more wireless technologies (e.g., Bluetooth, Wireless USB, IrDA, Z-Wave, ZigBee, RFID, one or more other NFC protocols, and/or one or more other protocols for close-proximity and/or wireless communication). A cellular network may include, e.g., technologies such as LTE, WiMAX, UMTS, CDMA, GSM, 3G, 4G, 5G, 6G, and/or one or more other technologies.

As used, herein, the term "memory," "memory storage device," "storage device," and/or "memory device" means computer hardware or circuitry to store information for use by a processor and/or other digital device. The memory, memory storage device, and/or memory device can be any suitable type of computer memory or any other type of electronic storage medium, such as, for example, read-only memory ("ROM"), random access memory ("RAM"), cache memory, compact disc read-only memory ("CDROM"), electro-optical memory, magneto-optical memory, programmable read-only memory ("PROM"), erasable programmable read-only memory ("EPROM"), electrically-erasable programmable read-only memory ("EEPROM"), a computer-readable medium, or the like. Memory can include, for example, a non-transitory memory, a non-transitory processor readable medium, a non-transitory computer readable medium, non-volatile memory, dynamic RAM ("DRAM"), volatile memory, ferroelectric RAM ("FRAM"), first-in-first-out ("FIFO") memory, last-in-first-out ("LIFO") memory, stack memory, non-volatile RAM ("NVRAM"), static RAM ("SRAM"), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module ("SIM") card, a hard drive ("HDD"), a solid state drive ("SSD"), etc. The memory, memory storage device, and/or memory device can be configured to store code, instructions, applications, software, firmware, and/or data, and may be external, internal, or both with respect to a processor.

Features described herein make reference to the accompanying drawings in which exemplary embodiments of the disclosure are shown. However, it should be understood that the systems of this disclosure can be embodied in many different forms and should not be construed as limited to the embodiments set forth herein.

It is to be understood that, as used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

Unless otherwise expressly stated, it is in no way intended than any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As used herein, the word "exemplary" means serving as a non-limiting example, instance, or illustration. The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation. As utilized herein, the terms "e.g." and "for example" set off lists of one or more non-limiting examples, instances, or illustrations.

While the present method, apparatus, and/or system has been described with reference to certain implementations, it will be understood by those skilled in the art that various changes, modifications, and variations may be made to the present disclosure and equivalents may be substituted without departing from the scope of the present disclosure. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1 A welding system comprising:
   power conversion circuitry configured to convert input power to welding power and to output the welding power to a weld circuit;
   a current sensor configured to measure a current of the weld circuit and generate a current sensor signal; and
   control circuitry configured to:
      control the power conversion circuitry to output the welding power according to one or more first pulse cycles at least by outputting the welding power in a voltage-controlled mode according to one or more first target peak voltages during at least a portion of a peak phase of the one or more first pulse cycles;
      monitor the current sensor signal during at least a portion of at least one of the one or more first pulse cycles to determine one or more measured currents;
      determine a second target peak voltage based on the one or more measured currents and a predetermined current range; and
      control the power conversion circuitry to output the welding power according to one or more second pulse cycles at least by outputting the welding power in the voltage-controlled mode according to the second target peak voltage during at least a portion of a peak phase of the one or more second pulse cycles.
Clause 2.The welding system of clause 1, wherein the control circuitry is further configured to, in response to determining that at least one of the one or more measured currents are greater than the predetermined current range, calculate the second target peak voltage by decreasing at least one of the one or more first target peak voltages.
Clause 3.The welding system of clause 1, wherein the control circuitry is further configured to, in response to determining that at least one of the one or more measured currents are less than the predetermined current range, calculate the second target peak voltage by increasing at least one of the one or more first target peak voltages.
Clause 4.The welding system of clause 1, wherein:
   the one or more first pulse cycles comprise an initial first pulse cycle and a subsequent first pulse cycle; and
   the control circuitry is further configured to:
      monitor the current sensor signal during at least a portion of the initial first pulse cycle to determine an initial measured current of the one or more measured currents; and
      monitor the current sensor signal during at least a portion of the subsequent first pulse cycle to determine a subsequent measured current of the one or more measured currents.
Clause 5.The welding system of clause 4, wherein the control circuitry is further configured to:
   in response to determining that both the initial measured current and the subsequent measured current are greater than the predetermined current range, calculate the second target peak voltage by decreasing at least one of the one or more first target peak voltages; and
   in response to determining that both the initial measured current and the subsequent measured current are less than the predetermined current range, calculate the second target peak voltage by increasing at least one of the one or more first target peak voltages.
Clause 6.The welding system of clause 4, wherein:
   the one or more first pulse cycles further comprise one or more intermediary first pulse cycles; and
   the control circuitry is further configured to:
      control the power conversion circuitry to output the welding power according to the one or more intermediary first pulse cycles after controlling the power conversion circuitry to output the welding power according to the initial first pulse cycle; and
      control the power conversion circuitry to output the welding power according to the subsequent first pulse cycle after controlling the power conversion circuitry to output the welding power according to the one or more intermediary first pulse cycles.
Clause 7.The welding system of clause 4, wherein the control circuitry is further configured to control the power conversion circuitry to output the welding power according to the subsequent first pulse cycle directly after controlling the power conversion circuitry to output the welding power according to the initial first pulse cycle.
Clause 8.The welding system of clause 1, wherein:
   the welding system further comprises a voltage sensor configured to measure a voltage of the weld circuit and generate a voltage sensor signal; and
   the control circuitry is further configured to:
      control the power conversion circuitry to output the welding power according to one or more initial first pulse cycles of the one or more first pulse cycles, the one or more initial first pulse cycles having one or more initial first pulse parameters;
      monitor the voltage sensor signal during a background phase of at least one of the one or more initial first pulse cycles to determine one or more short circuit parameters of one or more short circuit events;
      determine one or more subsequent first pulse parameters based on the one or more initial first pulse parameters and the one or more short circuit parameters; and
      control the power conversion circuitry to output the welding power according to one or more subsequent first pulse cycles of the one or more first pulse cycles, the one or more subsequent first pulse cycles having the one or more subsequent first pulse parameters.
Clause 9.The welding system of clause 8, wherein the determining of the one or more subsequent first pulse parameters comprises comparing the one or more short circuit parameters to one or more target short circuit parameters.
Clause 10.The welding system of clause 8, wherein the one or more short circuit parameters comprise a short circuit duration.
Clause 11.The welding system of clause 10, wherein:
   the one or more initial first pulse parameters comprise an initial pulse width;
   the one or more subsequent first pulse parameters comprise a subsequent pulse width; and
   the control circuitry is further configured to:
      in response to determining that the short circuit duration is greater than a target short circuit duration, calculate the subsequent pulse width by increasing the initial pulse width based on a difference between the short circuit duration and the target short circuit duration; and
      in response to determining that the short circuit duration is less than the target short circuit duration, calculate the subsequent pulse width by decreasing the initial pulse width based on the difference between the short circuit duration and the target short circuit duration.
Clause 12.The welding system of clause 10, wherein:
   the one or more initial first pulse parameters comprise an initial target peak voltage of the one or more first target peak voltages;
   the one or more subsequent first pulse parameters comprise a subsequent target peak voltage of the one or more first target peak voltages; and
   the control circuitry is further configured to:
      in response to determining that the short circuit duration is greater than a target short circuit duration, calculate the subsequent target peak voltage by increasing the initial target peak voltage based on a difference between the short circuit duration and the target short circuit duration; and
      in response to determining that the short circuit duration is less than the target short circuit duration, calculate the subsequent target peak voltage by decreasing the initial target peak voltage based on the difference between the short circuit duration and the target short circuit duration.
Clause 13.The welding system of clause 8, wherein:
   the one or more initial first pulse parameters comprise at least one of an initial pulse width, an initial pulse frequency, an initial wire feed speed, an initial ramping up rate, an initial ramping down rate, an initial target peak voltage, an initial target peak current, an initial target background voltage, an initial target background current, an initial target power, an initial target resistance, or an initial target enthalpy; and
   the one or more subsequent first pulse parameters comprise at least one of a subsequent pulse width, a subsequent pulse frequency, a subsequent wire feed speed, a subsequent ramping up rate, a subsequent ramping down rate, a subsequent target peak voltage, a subsequent target peak current, a subsequent target background voltage, a subsequent target background current, a subsequent target power, a subsequent target resistance, or a subsequent target enthalpy.
Clause 14.The welding system of clause 1, wherein the one or more measured currents comprise at least one of:
   one or more measured peak currents measured during the peak phase of at least one of the one or more first pulse cycles;
   one or more measured background currents measured during a background phase of at least one of the one or more first pulse cycles;
   one or more measured ramping up currents measured during a ramping up period of at least one of the one or more first pulse cycles;
   one or more measured ramping down currents measured during a ramping down period of at least one of the one or more first pulse cycles; or
   one or more sampled currents measured by sampling the current sensor signal over at least a portion of the one or more first pulse cycles.
Clause 15.The welding system of clause 1, wherein the control circuitry is configured to:
   control the power conversion circuitry to output the welding power in the voltage-controlled mode according to one or more first target background voltages during at least a portion of a background phase of the one or more first pulse cycles;
   monitor the current sensor signal during at least the portion of the background phase of the one or more first pulse cycles to determine one or more second measured currents;
   determine a second target background voltage based on the one or more second measured currents and a predetermined background current range; and
   control the power conversion circuitry to output the welding power according to one or more second pulse cycles at least by outputting the welding power in the voltage-controlled mode according to the second target background voltage during at least the portion of the background phase of the one or more second pulse cycles.
Clause 16.A welding system comprising:
   power conversion circuitry configured to convert input power to welding power and to output the welding power to a weld circuit;
   a current sensor configured to measure a current of the weld circuit and generate a current sensor signal; and
   control circuitry configured to:
      control the power conversion circuitry to output the welding power according to one or more first welding parameters at least by outputting the welding power in a voltage-controlled mode according to one or more first target voltages during at least a portion of one or more first waveforms of the one or more first welding parameters;
      monitor the current sensor signal during at least a portion of the one or more first waveforms to determine one or more measured currents;
      determine a second target voltage based on the one or more measured currents and a predetermined current range; and
      to output the welding power according to one or more second welding parameters at least by outputting the welding power in the voltage-controlled mode according to the second target voltage during at least a portion of a second waveform of the one or more second welding parameters.
Clause 17.The welding system of clause 16, wherein the power conversion circuitry is configured to output the welding power according to at least one of:
   a gas-metal arc welding (GMAW) or metal inert gas welding (MIG) operation;
   a pulsed gas-metal arc welding (GMAW-P) or pulsed metal inert gas (MIG) welding operation;
   a current-controlled welding operation;
   a voltage-controlled welding operation;
   a power-controlled welding operation;
   a resistance-controlled welding operation;
   an enthalpy-controlled welding operation;
   a tungsten inert gas welding (TIG) or gas tungsten arc welding (GTAW) operation;
   a flux cored arc welding (FCAW) operation;
   a shielded metal arc welding (SMAW) or stick welding operation;
   a plasma cutting operation;
   a plasma welding operation;
   a spray welding operation;
   a short circuit transfer welding operation;
   a pulse welding operation; or
   a pulsed spray welding operation.
Clause 18.The welding system of clause 16, wherein the control circuitry is further configured to:
   in response to determining that at least one of the one or more measured currents are greater than the predetermined current range, calculate the second target voltage by decreasing at least one of the one or more first target voltages; and
   in response to determining that at least one of the one or more measured currents are less than the predetermined current range, calculate the second target voltage by increasing at least one of the one or more first target voltages.
Clause 19.The welding system of clause 16,
   the one or more first waveforms comprise an initial first waveform and a subsequent first waveform; and
   the control circuitry is further configured to:
      monitor the current sensor signal during at least a portion of the initial first waveform to determine an initial measured current of the one or more measured currents;
      monitor the current sensor signal during at least a portion of the subsequent first waveform to determine a subsequent measured current of the one or more measured currents;
      in response to determining that both the initial measured current and the subsequent measured current are greater than the predetermined current range, calculate the second target voltage by decreasing at least one of the one or more first target voltages; and
      in response to determining that both the initial measured current and the subsequent measured current are less than the predetermined current range, calculate the second target voltage by increasing at least one of the one or more first target voltages.
Clause 20.The welding system of clause 16, wherein:
   a voltage sensor configured to measure a voltage of the weld circuit and generate a voltage sensor signal;
   the control circuitry is further configured to:
      control the power conversion circuitry to output the welding power according to one or more initial first welding parameters of the one or more first welding parameters, the one or more initial first welding parameters comprising an initial first waveform of the one or more first waveforms;
      monitor the voltage sensor signal during at least a portion of the initial first waveform to determine one or more short circuit parameters of one or more short circuit events;
      determine one or more subsequent first welding parameters of the one or more first welding parameters based on the one or more initial first welding parameters and the one or more short circuit parameters; and
      control the power conversion circuitry to output the welding power according to the one or more subsequent first welding parameters of the one or more first welding parameters.
Clause 21.The welding system of clause 16, wherein:
   the one or more initial first welding parameters comprise at least one of an initial ramping up rate, an initial wire feed speed, an initial ramp down rate, an initial target voltage, an initial target current, an initial target power, an initial target resistance, an initial target enthalpy, an initial duration of a phase of a waveform, an initial duration of a portion of a waveform, or an initial waveform frequency; and
   the one or more subsequent first welding parameters comprise at least one of a subsequent ramping up rate, a subsequent ramping down rate, a subsequent wire feed speed, a subsequent target voltage, a subsequent target current, a subsequent target power, a subsequent target resistance, a subsequent target enthalpy, a subsequent duration of a phase of a waveform, a subsequent duration of a portion of a waveform, or a subsequent waveform frequency.

## Claims

1. A welding system comprising:
power conversion circuitry configured to convert input power to welding power and to output the welding power to a weld circuit;
a current sensor configured to measure a current of the weld circuit and generate a current sensor signal; and
control circuitry configured to:
control the power conversion circuitry to output the welding power according to one or more first pulse cycles at least by outputting the welding power in a voltage-controlled mode according to one or more first target peak voltages during at least a portion of a peak phase of the one or more first pulse cycles;
monitor the current sensor signal during at least a portion of at least one of the one or more first pulse cycles to determine one or more measured currents;
determine a second target peak voltage based on the one or more measured currents and a predetermined current range; and
control the power conversion circuitry to output the welding power according to one or more second pulse cycles at least by outputting the welding power in the voltage-controlled mode according to the second target peak voltage during at least a portion of a peak phase of the one or more second pulse cycles.

2. The welding system of claim 1, wherein the control circuitry is further configured to, in response to determining that at least one of the one or more measured currents are greater than the predetermined current range, calculate the second target peak voltage by decreasing at least one of the one or more first target peak voltages.

3. The welding system of claim 1, wherein the control circuitry is further configured to, in response to determining that at least one of the one or more measured currents are less than the predetermined current range, calculate the second target peak voltage by increasing at least one of the one or more first target peak voltages.

4. The welding system of claim 1, wherein:
the one or more first pulse cycles comprise an initial first pulse cycle and a subsequent first pulse cycle; and
the control circuitry is further configured to:
monitor the current sensor signal during at least a portion of the initial first pulse cycle to determine an initial measured current of the one or more measured currents; and
monitor the current sensor signal during at least a portion of the subsequent first pulse cycle to determine a subsequent measured current of the one or more measured currents.

5. The welding system of claim 4, wherein the control circuitry is further configured to:
in response to determining that both the initial measured current and the subsequent measured current are greater than the predetermined current range, calculate the second target peak voltage by decreasing at least one of the one or more first target peak voltages; and
in response to determining that both the initial measured current and the subsequent measured current are less than the predetermined current range, calculate the second target peak voltage by increasing at least one of the one or more first target peak voltages.

6. The welding system of claim 4, wherein:
the one or more first pulse cycles further comprise one or more intermediary first pulse cycles; and
the control circuitry is further configured to:
control the power conversion circuitry to output the welding power according to the one or more intermediary first pulse cycles after controlling the power conversion circuitry to output the welding power according to the initial first pulse cycle; and
control the power conversion circuitry to output the welding power according to the subsequent first pulse cycle after controlling the power conversion circuitry to output the welding power according to the one or more intermediary first pulse cycles.

7. The welding system of claim 4, wherein the control circuitry is further configured to control the power conversion circuitry to output the welding power according to the subsequent first pulse cycle directly after controlling the power conversion circuitry to output the welding power according to the initial first pulse cycle.

8. The welding system of claim 1, wherein:
the welding system further comprises a voltage sensor configured to measure a voltage of the weld circuit and generate a voltage sensor signal; and
the control circuitry is further configured to:
control the power conversion circuitry to output the welding power according to one or more initial first pulse cycles of the one or more first pulse cycles, the one or more initial first pulse cycles having one or more initial first pulse parameters;
monitor the voltage sensor signal during a background phase of at least one of the one or more initial first pulse cycles to determine one or more short circuit parameters of one or more short circuit events;
determine one or more subsequent first pulse parameters based on the one or more initial first pulse parameters and the one or more short circuit parameters; and
control the power conversion circuitry to output the welding power according to one or more subsequent first pulse cycles of the one or more first pulse cycles, the one or more subsequent first pulse cycles having the one or more subsequent first pulse parameters, and optionally wherein the determining of the one or more subsequent first pulse parameters comprises comparing the one or more short circuit parameters to one or more target short circuit parameters.

9. The welding system of claim 8, wherein the one or more short circuit parameters comprise a short circuit duration.

10. The welding system of claim 9, wherein:
the one or more initial first pulse parameters comprise an initial pulse width;
the one or more subsequent first pulse parameters comprise a subsequent pulse width; and
the control circuitry is further configured to:
in response to determining that the short circuit duration is greater than a target short circuit duration, calculate the subsequent pulse width by increasing the initial pulse width based on a difference between the short circuit duration and the target short circuit duration; and
in response to determining that the short circuit duration is less than the target short circuit duration, calculate the subsequent pulse width by decreasing the initial pulse width based on the difference between the short circuit duration and the target short circuit duration or
wherein:
the one or more initial first pulse parameters comprise an initial target peak voltage of the one or more first target peak voltages;
the one or more subsequent first pulse parameters comprise a subsequent target peak voltage of the one or more first target peak voltages; and
the control circuitry is further configured to:
in response to determining that the short circuit duration is greater than a target short circuit duration, calculate the subsequent target peak voltage by increasing the initial target peak voltage based on a difference between the short circuit duration and the target short circuit duration; and
in response to determining that the short circuit duration is less than the target short circuit duration, calculate the subsequent target peak voltage by decreasing the initial target peak voltage based on the difference between the short circuit duration and the target short circuit duration.

11. The welding system of claim 8, wherein:
the one or more initial first pulse parameters comprise at least one of an initial pulse width, an initial pulse frequency, an initial wire feed speed, an initial ramping up rate, an initial ramping down rate, an initial target peak voltage, an initial target peak current, an initial target background voltage, an initial target background current, an initial target power, an initial target resistance, or an initial target enthalpy; and
the one or more subsequent first pulse parameters comprise at least one of a subsequent pulse width, a subsequent pulse frequency, a subsequent wire feed speed, a subsequent ramping up rate, a subsequent ramping down rate, a subsequent target peak voltage, a subsequent target peak current, a subsequent target background voltage, a subsequent target background current, a subsequent target power, a subsequent target resistance, or a subsequent target enthalpy.

12. The welding system of claim 1, wherein the one or more measured currents comprise at least one of:
one or more measured peak currents measured during the peak phase of at least one of the one or more first pulse cycles;
one or more measured background currents measured during a background phase of at least one of the one or more first pulse cycles;
one or more measured ramping up currents measured during a ramping up period of at least one of the one or more first pulse cycles;
one or more measured ramping down currents measured during a ramping down period of at least one of the one or more first pulse cycles; or
one or more sampled currents measured by sampling the current sensor signal over at least a portion of the one or more first pulse cycles.

13. The welding system of claim 1, wherein the control circuitry is configured to:
control the power conversion circuitry to output the welding power in the voltage-controlled mode according to one or more first target background voltages during at least a portion of a background phase of the one or more first pulse cycles;
monitor the current sensor signal during at least the portion of the background phase of the one or more first pulse cycles to determine one or more second measured currents;
determine a second target background voltage based on the one or more second measured currents and a predetermined background current range; and
control the power conversion circuitry to output the welding power according to one or more second pulse cycles at least by outputting the welding power in the voltage-controlled mode according to the second target background voltage during at least the portion of the background phase of the one or more second pulse cycles.

14. A welding system comprising:
power conversion circuitry configured to convert input power to welding power and to output the welding power to a weld circuit;
a current sensor configured to measure a current of the weld circuit and generate a current sensor signal; and
control circuitry configured to:
control the power conversion circuitry to output the welding power according to one or more first welding parameters at least by outputting the welding power in a voltage-controlled mode according to one or more first target voltages during at least a portion of one or more first waveforms of the one or more first welding parameters;
monitor the current sensor signal during at least a portion of the one or more first waveforms to determine one or more measured currents;
determine a second target voltage based on the one or more measured currents and a predetermined current range; and
to output the welding power according to one or more second welding parameters at least by outputting the welding power in the voltage-controlled mode according to the second target voltage during at least a portion of a second waveform of the one or more second welding parameters.

15. The welding system of claim 14, wherein the power conversion circuitry is configured to output the welding power according to at least one of:
a gas-metal arc welding (GMAW) or metal inert gas welding (MIG) operation;
a pulsed gas-metal arc welding (GMAW-P) or pulsed metal inert gas (MIG) welding operation;
a current-controlled welding operation;
a voltage-controlled welding operation;
a power-controlled welding operation;
a resistance-controlled welding operation;
an enthalpy-controlled welding operation;
a tungsten inert gas welding (TIG) or gas tungsten arc welding (GTAW) operation;
a flux cored arc welding (FCAW) operation;
a shielded metal arc welding (SMAW) or stick welding operation;
a plasma cutting operation;
a plasma welding operation;
a spray welding operation;
a short circuit transfer welding operation;
a pulse welding operation; or
a pulsed spray welding operation, or wherein the control circuitry is further configured to:
in response to determining that at least one of the one or more measured currents are greater than the predetermined current range, calculate the second target voltage by decreasing at least one of the one or more first target voltages; and
in response to determining that at least one of the one or more measured currents are less than the predetermined current range, calculate the second target voltage by increasing at least one of the one or more first target voltages or wherein
in the welding system
the one or more first waveforms comprise an initial first waveform and a subsequent first waveform; and
the control circuitry is further configured to:
monitor the current sensor signal during at least a portion of the initial first waveform to determine an initial measured current of the one or more measured currents;
monitor the current sensor signal during at least a portion of the subsequent first waveform to determine a subsequent measured current of the one or more measured currents;
in response to determining that both the initial measured current and the subsequent measured current are greater than the predetermined current range, calculate the second target voltage by decreasing at least one of the one or more first target voltages; and
in response to determining that both the initial measured current and the subsequent measured current are less than the predetermined current range, calculate the second target voltage by increasing at least one of the one or more first target voltages orwherein:
a voltage sensor configured to measure a voltage of the weld circuit and generate a voltage sensor signal;
the control circuitry is further configured to:
control the power conversion circuitry to output the welding power according to one or more initial first welding parameters of the one or more first welding parameters, the one or more initial first welding parameters comprising an initial first waveform of the one or more first waveforms;
monitor the voltage sensor signal during at least a portion of the initial first waveform to determine one or more short circuit parameters of one or more short circuit events;
determine one or more subsequent first welding parameters of the one or more first welding parameters based on the one or more initial first welding parameters and the one or more short circuit parameters; and
control the power conversion circuitry to output the welding power according to the one or more subsequent first welding parameters of the one or more first welding parameters or
wherein:
the one or more initial first welding parameters comprise at least one of an initial ramping up rate, an initial wire feed speed, an initial ramp down rate, an initial target voltage, an initial target current, an initial target power, an initial target resistance, an initial target enthalpy, an initial duration of a phase of a waveform, an initial duration of a portion of a waveform, or an initial waveform frequency; and
the one or more subsequent first welding parameters comprise at least one of a subsequent ramping up rate, a subsequent ramping down rate, a subsequent wire feed speed, a subsequent target voltage, a subsequent target current, a subsequent target power, a subsequent target resistance, a subsequent target enthalpy, a subsequent duration of a phase of a waveform, a subsequent duration of a portion of a waveform, or a subsequent waveform frequency.
